(19) Europäisches Patentamt
European Patent Office
Office européen des brevets

(11) **EP 3 035 290 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(51) Int Cl.:
***G06T 15/08*** *(2011.01)*

(21) Anmeldenummer: **14198618.2**

(22) Anmeldetag: **17.12.2014**

(54) **Verfahren zur Erzeugung eines Anzeigedatensatzes durch Volumenrendern, Recheneinrichtung und Computerprogramm**

Method for generating a display data set with volume renders, computing device and computer program

Procédé de génération d'un jeu de données d'affichage avec rendu de volumes, dispositif de calcul et programme informatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016 Patentblatt 2016/25**

(73) Patentinhaber: **Siemens Healthcare GmbH 91052 Erlangen (DE)**

(72) Erfinder: **Schneider, Robert 90574 Roßtal (DE)**

(56) Entgegenhaltungen:
• SCHULZE J P ET AL: "Integrating pre-integration into the shear-warp algorithm", ACM INTERNATIONAL CONFERENCE PROCEEDING SERIES - PROCEEDINGS OF THE 2003 EUROGRAPHICS/IEEE TVCG WORKSHOP ON VOLUME GRAPHICS, Bd. 45, 2003, Seiten 109-118+169, XP002740513, VG '03 2003 ASSOCIATION FOR COMPUTING MACHINERY USA DOI: 10.1145/827051.827068

• WEILER M ET AL: "Hardware-based ray casting for tetrahedral meshes", VIS 2003. IEEE VISUALIZATION 2003. PROCEEDINGS., 1. Januar 2003 (2003-01-01), Seiten 333-340, XP031173516, Seattle, US DOI: 10.1109/VISUAL.2003.1250390 ISBN: 978-0-7803-8120-9

• ESPINHA R ET AL: "High-Quality Hardware-Based Ray-Casting Volume Rendering Using Partial Pre-Integration", SIBGRAPI 2005 : XVIII BRAZILIAN SYMPOSIUM ON COMPUTER GRAPHICS AND IMAGE PROCESSING, 9. Oktober 2005 (2005-10-09), Seiten 273-280, XP010897156, [NATAL, RIO GRANDE DO NORTE,BRAZIL, OCTOBER 9 - 12, 2005 ; CONFERENCE PROCEEDINGS], IEEE COMPUTER SOCIETY, LOS ALAMITOS, CALIF. [U.A.] DOI: 10.1109/SIBGRAPI.2005.29 ISBN: 978-0-7695-2389-7

• MARCO AMENT ET AL: "Direct Interval Volume Visualization", IEEE TRANSACTIONS ON VISUALIZATION AND COMPUTER GRAPHICS, Bd. 16, Nr. 6, 1. November 2010 (2010-11-01), Seiten 1505-1514, XP011327233, IEEE SERVICE CENTER, LOS ALAMITOS, CA, US ISSN: 1077-2626, DOI: 10.1109/TVCG.2010.145

**Beschreibung**

Die Erfindung betrifft ein Verfahren zur Erzeugung eines Anzeigedatensatzes zur Darstellung eines dreidimensionalen Quelldatensatzes wenigstens eines Anzeigeparameters durch Volumenrendern, wobei ein Volumenrenderintegral mit einem eine Auslöschungsfunktion, die einem Wert des Anzeigeparameters einen Auslöschungswert pro Länge zuordnet, und eine Farbfunktion, die einem Wert des Anzeigeparameters wenigstens einen Farbwert pro Strecke zuordnet, aufweisenden Integranden zur Ermittlung der Anzeigedaten ausgewertet wird, und wobei das Volumenrenderintegral in Beiträge aus dritten Opazitäten als von der Auslöschungsfunktion abhängige Integrale und dritten Farbkoeffizienten als von der Farbfunktion und der Auslöschungsfunktion abhängige Integrale, die jeweils durch einen Startwert und einen Endwert des Anzeigeparameters sowie eine das Intervall, über das integriert wird, beschreibende Wunschabtastlänge beschrieben sind, zerlegt wird. Daneben betrifft die Erfindung eine Recheneinrichtung sowie ein Computerprogramm.

Das direkte Volumenrendern (direct volume rendering) mit hoher visueller Qualität ist inzwischen zu einer Standardvoraussetzung für die Visualisierung von dreidimensionalen medizinischen Datensätzen geworden. Das Prinzip des Volumenrenderns ist dabei im Stand der Technik bereits ausführlich bekannt. Durch das Volumenrendern wird eine zweidimensionale Projektion, hier der Anzeigedatensatz, eines dreidimensionalen Quelldatensatzes ermittelt, in dem ein Anzeigeparameter diskret abgetastet, insbesondere also in Voxeln, vorliegt. Im medizinischen Bereich kann es sich dabei um anatomische Parameter, beispielsweise Hounsfield-Werte eines CT-Datensatzes, handeln, es sind jedoch auch andere, insbesondere skalare Größen denkbar, beispielsweise solche, die aus funktionaler Bildgebung ermittelt wurden und dergleichen.

Das direkte Volumenrendering geht davon aus, dass jeder Wert des Anzeigeparameters auf eine Auslöschungsdichte und eine Farbdichte abgebildet wird. Dieser Schritt wird Klassifizierung genannt und verwendet eine Transferfunktion, die üblicherweise zweiteilig als eine Auslöschungsfunktion, die einen Wert des Anzeigeparameters auf eine Auslöschungsdichte bzw. Opazitätsdichte abbildet, und eine Farbfunktion, die einen Wert des Anzeigeparameters auf eine Farbdichte abbildet, formuliert wird. Nachdem der Anzeigeparameter in diskreten Voxeln vorliegt, kann vor oder nach der Klassifizierung eine Interpolation erfolgen, um einen möglichst glatten Verlauf über das im dreidimensionalen Quelldatensatz erfasste Volumen zu erhalten. Es können also entweder die Dichten interpoliert werden oder der Anzeigeparameter.

Volumenrendervorgänge gehen nun meist von einem gedachten Augenpunkt und einer Blickrichtung aus, so dass sich ein Strahl ergibt. Integriert man einen die Auslöschungsfunktion (häufig auch "extinction function") und die Farbfunktion ("colour function") enthaltenden Integranden über einen solchen Strahl auf, erhält man einen Intensitätswert, der die Wiedergabe des entsprechenden Pixels im Anzeigedatensatz beschreibt. Das soeben beschriebene Integral wird das Volumenrenderintegral ("volume rendering integral") genannt und muss aus einer mathematischen Sichtweise exakt oder zumindest approximativ gelöst werden, um den Anzeigedatensatz zu ermitteln, sei es explizit oder implizit.

In der einfachsten Form wird das Volumenrenderintegral approximativ durch eine Diskretisierung unter Verwendung einer Riemann-Summe gelöst, worin das von dem Quelldatensatz umfasste Volumen entlang von Strahlen abgetastet wird und der Quelldatensatz als Eingangsdatensatz verwendet wird, um Farbdichte- und Auslöschungsdichtewerte für die Strahlen zu ermitteln. Wenn die Abtastlänge, letztlich also die Schrittweite, der Riemann-Summe gegen 0 konvergiert, konvergiert auch die diskrete Approximation gegen die exakte Lösung des Volumenrenderintegrals.

Vor allem in medizinischen Anwendungen sollen die Anzeigedatensätze möglichst in Echtzeit zur Verfügung stehen, was sich als besonders schwierig erweist, wenn sogenannte Rendering-Server verwendet werden, die für eine Vielzahl von Benutzern Anzeigedatensätze liefern sollen. Mithin sind die für derartige Approximationen mit Riemann-Summen verwendeten Abtastlängen eher groß, so dass die resultierenden Bilder des direkten Volumenrenderns unter Verwendung der Riemann-Summe üblicherweise deutliche Diskretisierungsartefakte zeigen. Die Zahl dieser Artefakte nimmt zwar ab, wenn die Abtastlänge ("sampling distance") reduziert wird, doch die benötigte Abtastlänge zum Verhindern solcher Artefakte hängt davon ab, wie schnell sich die Werte des Anzeigeparameters im Volumen lokal verändern, genau wie davon, wie schnell sich die Transferfunktion über den Wertebereich der Anzeigeparameter in den Voxeln ändert.

Die Abtastlänge, um lokale Artefakte zu vermeiden, hängt mithin sowohl von den Änderungsortsfrequenzen im Quelldatensatz als auch von den Ortsfrequenzen der Transferfunktion ab, so dass die insgesamt benötigte Abtastlänge als ein Produkt dieser zwei beitragenden Anteile verstanden werden kann. Es würde mithin eine äußerst kleine Abtastlänge benötigt, um artefaktfreie Anzeigedatensätze als Ergebnisbilder zu erhalten, so dass eine äußerst niedrige Performance des Rendervorgangs auf der Recheneinrichtung, die ihn durchführt, gegeben ist. Hierzu kommt, dass es äußerst schwer ist, vorherzusagen, welche Abtastlänge optimal wäre, so dass keine Artefakte auftreten.

Zur Lösung dieser Problematik wurde eine Technik vorgeschlagen, die heute als Vorabintegration (Englisch: "pre-integration") bekannt ist. Grundlegende Veröffentlichungen, in denen die Vorabintegration vorgeschlagen wurde, sind die Artikel von N. Max et al., "Area and volume coherence for efficient visualization of 3d scalar functions", ACM Computer Graphics (Proceedings San Diego Workshop on Volume Visualization 1990) 24, 5 (1990), Seiten 27-33 (im Folgenden [Max]), S. Röttger et al., "Hardware-accelerated volume and isosurface rendering based on cell-projection", Proceedings IEEE Visualization 2000 (2000), Seiten 109-116 (im Folgenden [Röttger1]) und K. Engel et al., "High quality pre-integrated volume rendering using hardware accelerated pixel shading", Proceedings Graphics Hardware 2001 (2001), Mark W., Schilling A., (Eds.), ACM Press, Seiten 9-16 (im Folgenden [Engel]).

Die Vorabintegration erlaubt eine deutlich höhere Bildqualität, ohne dass die Abtastrate erhöht und mithin die Abtastlänge erniedrigt werden muss. Die Idee ist, eine n-dimensionale Tabelle, die als Vorabintegrationstabelle ("pre-integration table") bezeichnet wird, im Voraus zu erzeugen, die die Transferfunktion, letztlich also die Auslöschungsfunktion und die Farbfunktion, als Eingangswerte verwendet, wobei für eine lineare Veränderung zwischen allen möglichen Start- und Endpositionen eines Intervalls das Volumenrenderintegral exakt gelöst wird und in der Tabelle gespeichert wird. Während des eigentlichen Vorgangs des Volumenrenderns wird dann auf die Daten der Vorabintegrationstabelle zurückgegriffen anstatt auf die ursprüngliche Transferfunktion, nachdem das Volumenrenderintegral in Beiträge zerlegt werden kann, die aus der Vorabintegrationstabelle abgelesen werden können. Durch diesen Ansatz ergibt sich eine äußerst deutliche Erhöhung der Bildqualität im Vergleich zu anderen Ansätzen, die die Riemann-Summe explizit mit größeren Abtastlängen berechnen.

Betrachtet man eine eindimensionale Transferfunktion, erhält man eine resultierende dreidimensionale Vorabintegrationstabelle, worin zwei Dimensionen die Start- und Endwerte des Anzeigeparameters für ein Intervall betreffen, die dritte Dimension aber als Länge, über die integriert wird, die Abtastlänge, mithin die Schrittweite, speichert. Unglücklicherweise liegen jedoch bereits dann, wenn für 16 Bit-Volumendaten eine hochqualitative dreidimensionale Vora-tegrationstabelle geschaffen werden soll, exorbitante Anforderungen an den benötigten Speicherplatz vor. Hierzu kommt, dass es äußerst wichtig ist, dass ein Benutzer die Transferfunktion interaktiv verändern kann, was für eine hochqualitative, dreidimensionale Vorabintegrationstabelle eine immense Rechenleistung und eine immense Speicherplatzbreite benötigt, um eine solche Vorabintegrationstabelle in der gewünschten Zeit, insbesondere interaktiv, zu erzeugen.

Im speziellen Fall, in dem die Abtastlänge als konstant angenommen wird, ist die Vorabintegrationstabelle lediglich zweidimensional, was als eine praktisch anwendbare Größe gesehen wird. Allerdings existiert eine Vielzahl von konkreten Anwendungssituationen, in denen die Annahme einer konstanten Abtastlänge nicht möglich ist, sogar für den einfachen Fall, wo das Volumenrendern für eine orthogonale Projektion ("orthographic camera") durchgeführt wird.

Triviale Beispiele, die zeigen, dass derartige Situationen nicht vermieden werden können, sind die Teile eines Strahls, wo dieser das vom dreidimensionalen Quelldatensatz abgedeckte Volumen trifft oder verlässt. Unter Verwendung einer konstanten Abtastlänge bzw. Abtastrate wäre es zwar möglich, eine dieser Situationen zu vermeiden, indem die Abtastposition entlang des Strahls entsprechend verschoben werden, jedoch ist es nicht denkbar, beide Randpunkte korrekt zu behandeln. Andere Beispiele sind Volumenclipping und Volumensegmentierung, welche beide einfache Erweiterungen des Volumenrenderns sind, die häufig in Nachverarbeitungsanwendungen zur Auswertung der medizinischen Daten angewendet werden. Ohne eine Anpassung der Abtastlänge bzw. Abtastrate würden in solchen Situationen deutlich erkennbare Renderartefakte auftreten. Ferner ist die Möglichkeit des vorab integrierten Volumenrenderns mit beliebiger Abtastlänge bereits grundsätzlich dann sinnvoll, wenn die dreidimensionalen Quelldatensätze selbst betrachtet werden. Beispielsweise ist das resultierende Volumen dann, wenn eine trilineare Interpolation durchgeführt wird, nur innerhalb einer Gruppe von acht Voxeln, die trilinear interpoliert sind, $C^\infty$-stetig, nicht aber an der Begrenzung dieser acht Voxel, wo nur eine $C^0$-Stetigkeit vorliegt. Es wäre nun besonders vorteilhaft, die Abtastpositionen immer an solchen $C^0$-Grenzen zu positionieren, wenn die interpolierten Werte entlang eines Strahls approximiert werden. Ein anderes Beispiel ist das adaptive Volumenrendern, bei dem die Abtastlänge abhängig von lokalen Eigenschaften variieren kann, was häufig als Ansatz zum Optimieren der Performance genutzt wird.

Die Vorabintegration mit letztlich beliebigen Abtastlängen benutzen zu können ist auch dann äußerst vorteilhaft, wenn eine Gradientenopazitätsmodulation bei aktivierter Vorabintegration durchgeführt werden soll. Die Gradientenopazitätsmodulation ("gradient opacity modulation") ist eine Rendertechnik, die das Modifizieren der Opazität unter Verwendung der lokalen Gradientenstärke während des Renderns erlaubt. Diese Technik wird oft als ein zusätzlicher Volumenrender-Submodus verwendet, der es erlaubt, bestimmte Eigenschaften abhängig von der Gradientenstärke vorzuheben, beispielsweise bei der Hervorhebung von Grenzbereichen von Geweben.

Während die Vorabintegrationstechnik eine grundsätzliche Voraussetzung für hochqualitatives direktes Volumenrendern darstellt, ist bis jetzt kein optimaler Algorithmus verfügbar, um den wichtigen Fall beliebiger Abtastlängen zu realisieren. Es wurden zwar bereits einige Ansätze vorgeschlagen, die im Folgenden vorgestellt werden sollen, doch diese existierenden Ansätze konstruieren entweder eine dreidimensionale Vorabintegrationstabelle, gehen Kompromisse bezüglich der Bildqualität des Anzeigedatensatzes ein, oder sie erfordern eine große Anzahl von Zugriffen auf Vorabintegrationstabellen, was hinsichtlich der Performance auf der Recheneinrichtung ebenso äußerst nachteilig ist.

Bevor näher auf den Stand der Technik zu frei wählbaren Abtastlängen bei Vorabintegration eingegangen werden wird, sei kurz eine Einführung in die zugrunde liegenden mathematischen Formeln für das vorabintegrierte Volumenrendern ("pre-integrated volume rendering") gegeben, die selbstverständlich auch für die vorliegende Erfindung fortgelten. Auf diese Art und Weise kann die Erfindung und auch der vorherige Stand der Technik zu diesem Thema besser verstanden werden, wobei für detaillierte Informationen zu diesem Thema beispielsweise auf den Artikel von M. Kraus und T. Ertl, "Pre-integrated volume rendering", The Visualization Handbook (2004), Hansen C. D. Johnson C. R., (Eds.), Academic Press, Seiten 211-228 (im Folgenden [Kraus1]), verwiesen sei.

Sei $\tau(s)$ eine skalare Funktion, die die Auslöschungsdichte in Abhängigkeit von dem Anzeigeparameter s beschreibt, mithin die Auslöschungsfunktion, und sei $c(s)\tau(s)$ eine skalare Funktion, die eine Farbdichte beschreibt ($c(s)$ kann auch als Farbfunktion bezeichnet werden), dann ergibt sich das Volumenrenderintegral entlang eines Strahls, der durch z im Intervall [0,D] parametrisiert wird, zu

$$I = \int_0^D \tau\big(s(z)\big)\,c(s(z))\exp\big(-\int_0^z \tau(s(t))dt\big)dz \qquad , \tag{1}$$

worin s(z) eine Funktion ist, die dem Parameter z einen interpolierten Voxelwert des Anzeigeparameters zuordnet.

Diese wohlbekannte Integralgleichung stellt die mathematische Grundlage für das Volumenrendern dar, was bedeutet, dass ein Volumenrenderer, der als Hardware und/oder Software auf einer Recheneinrichtung realisiert ist, diese Formel auf die eine oder andere Weise approximiert auswerten wird.

Wenn das Intervall entlang des Strahls in n äquidistante Teile mit einer Abtastlänge d = D/n aufgeteilt wird, können die Opazität $\alpha_i$ und der wenigstens eine Farbkoeffizient $C_i$ für Subintervalle der Abtastlänge d als

$$\alpha_i = 1 - \exp\big(-\int_{id}^{(i+1)d} \tau\big(s(t)\big)dt\big) \tag{2}$$

und

$$C_i = \int_{id}^{(i+1)d} \tau\big(s(z)\big)\,c(s(z))\exp\big(-\int_{id}^z \tau\big(s(t)\big)dt\big)dz \tag{3}$$

definiert werden. Unter Verwendung dieser Sub-Integrale ergibt sich die Volumenrendergleichung (1) zu

$$I = \sum_{i=0}^{n-1} C_i \prod_{j=0}^{i-1}(1 - \alpha_j) \qquad . \tag{4}$$

Diese Zerlegung ist es, die auch der VorabintegrationsTechnik zugrunde liegt, wobei insbesondere die $C_i$ und die $\alpha_i$, letztere ggf. auch als die Transmission $T_i = 1-\alpha_i$, durch die Vorabintegrationstabellen zur Verfügung gestellt werden sollen, was auch für die später beschriebene vorliegende Erfindung gilt. (4) gibt also die eingangs bereits angesprochene Zerlegung des Volumenrenderintegrals an.

Approximiert man in einem Intervall der Abtastlänge d die Funktion s(z) als linear, wobei der entsprechende Zusammenhang neben der Abtastlänge d durch den Startwert $s_f$ ("front value") und den Endwert $s_b$ ("back value") des durch s(z) gegebenen Anzeigeparameters bestimmt wird, können die Gleichungen (2) und (3) als

$$\alpha_i \approx 1 - \exp\big(-\int_0^1 \tau\big((1-\omega)s_f + \omega s_b\big)\,d\,d\omega\big) \tag{5}$$

und

$$C_i \approx \int_0^1 \tau\big((1-\omega)s_f + \omega s_b\big)\,c\big((1-\omega)s_f + \omega s_b\big)\exp\Big(-\int_0^\omega \tau\big((1-t)s_f + t\,s_b\big)\,d\,dt\Big)\,d\,d\omega \tag{6}$$

approximiert werden. Durch den aufgrund der Annahme der Linearität problemlosen Übergang auf die Integrationsvariable $\omega$ ergibt sich eine Intervalllänge in (5) und (6) nicht mehr als d, sondern als 1.

Die Gleichungen (5) und (6) hängen nun nur noch von drei Parametern ab, nämlich den Start- und Endwerten $s_f$ und $s_b$ eines Sub-Intervalls und von der Abtastlänge d des Sub-Intervalls. Erzeugt man nun eine dreidimensionale Vorabintegrationstabelle für alle möglichen Konstellationen von $\alpha(s_f, s_b, d)$ und $C(s_f, s_b, d)$, kann das Volumenrenderintegral durch (4) approximiert werden, indem die entsprechenden Opazitäten und Farbkoeffizienten aus der Vorabintegrationstabelle abgerufen werden. Es wird also die Zerlegung in die Sub-Intervalle vorgenommen, was d definiert, die Werte für $s_f$ und $s_b$ werden an den Abtastpositionen bestimmt und die Vorabintegrationstabelle kann genutzt werden.

Die Vorabintegration kann als ein wichtiger Beitrag im Feld des Volumenrenderns angesehen werden, denn durch sie kann die resultierende Bildqualität des Anzeigedatensatzes für eine gegebene Abtastrate im Vergleich zu anderen Ansätzen deutlich erhöht werden, während der Algorithmus sehr einfach und schnell bleibt, solange die Vorabintegrationstabelle vorhanden ist. Ohne Vorabintegration führt die erforderliche hohe Abtastrate, um Renderartefakte zu verhindern, für nicht lineare Transferfunktionen schnell zu Performance-Problemen, was erklärt, warum heutzutage das vorabintegrierte Volumenrendern eine Technik ist, die von nahezu allen eine hohe Qualität liefernden Volumenrenderern in Recheneinrichtungen angewendet wird, die in Echtzeit, also mit interaktiven Frameraten, neue Anzeigedatensätze liefern können.

In der ursprünglichen Veröffentlichung zur Vorabintegration von Röttger et al., [Röttger1], wurde ein Ansatz vorgeschlagen, demzufolge eine dreidimensionale Vorabintegrationstabelle erzeugt wurde und dreidimensionale Textur-Hardware verwendet wurde, um diese Tabelle zu speichern und für Anfragen bereitzustellen. Eine derartige dreidimensionale Tabelle ist jedoch in vielen Fällen nicht praktisch einsetzbar, nachdem äußerst große Anforderungen an die entsprechende Speichereinrichtung vorliegen und eine große Zeit bzw. eine große Rechenleistung benötigt wird, um die Tabelle zu aktualisieren. Daher wurden im Stand der Technik bereits Ansätze vorgeschlagen, die direkt oder indirekt dreidimensionale Vorabintegrationstabellen vermeiden und dennoch beliebig wählbare Abtastlängen erlauben wollen.

Eine erste Klasse solcher Ansätze ist die Beschränkung der Transferfunktionen auf Fälle, in denen die resultierenden Integrale der Volumenrendergleichung analytisch gehandhabt werden können. So wurden beispielsweise von Kniss et al, "Gaussian transfer functions for multi-field volume visualizations", Proceedings Visualization 2003 (2003), Seite 497-504, im Folgenden [Kniss], spezielle Transferfunktionen vorgeschlagen, die auf Gauß-Funktionen basieren. Nachdem aber derartige Ansätze nicht für allgemeine Transferfunktionen möglich sind, sind sie von weniger Interesse.

Engel et al. haben in [Engel] vorgeschlagen, die Gleichungen (5) und (6) zu approximieren, indem eindimensionale Integralfunktionen verwendet werden. Zur Approximation der Gleichung (6) wurde vorgeschlagen, eine Integralfunktion zu verwenden, die den Selbstschwächungsterm vernachlässigt, so dass ein deutlich einfacherer Integrand entsteht, was aber auf der Annahme basiert, dass der Ausdruck $\tau(s) * d$ sehr klein ist. Eine andere Näherung, die Integralfunktionen einsetzt, aber weniger Annahmen trifft, wurde in einer Veröffentlichung von M. Kraus, "Pre-integrated volume rendering for Multi-Dimensional Transfer Functions", IEEE/EG Symposium on Volume and Point-Based Graphics, H.-C. Hege, D. Laidlaw, R. Pajarola, O. Staat, (Eds.), Seiten 1-8, 2008 (im Folgenden [Kraus2]), vorgeschlagen. In dieser Veröffentlichung wird die Selbstschwächung nicht vernachlässigt, sondern ebenso berücksichtigt. Dies erlaubte es, den Näherungsfehler für allgemeine Transferfunktionen und größere Abtastlängen zu reduzieren.

Der Ansatz von Engel et al., die Volumenrendergleichung mit Hilfe von Integralfunktionen zu vereinfachen, wurde ursprünglich vorgeschlagen, um die Berechnung zweidimensionaler Vorabintegrationstabellen zu beschleunigen und wurde später von Kraus erweitert, um Vorabintegrationen auch für mehrdimensionale Transferfunktionen zu approximieren. Während also der ursprüngliche Zweck nicht war, den Fall beliebiger Abtastlängen zu behandeln, sind diese Ansätze dennoch geeignet, um auch diesen Fall zu approximieren, da die Abtastlänge d als unabhängiger Parameter in ihren Gleichungen auftritt, die die Farbkoeffizienten unter Verwendung von Integralfunktionen approximieren.

Problematischerweise hat der Einsatz solcher Ansätze mit Integralfunktionen Grenzen. Beispielsweise ist es eine zulässige Annahme, dass die Auslöschungsdichte für einige Werte unendlich groß werden kann, das bedeutet, dass der Strahl unmittelbar die volle Opazität erreicht, wenn ein derartiger Punkt erreicht wird. In einem solchen Fall würde eine eindimensionale Integralfunktion nicht gut arbeiten, da die Integralfunktion nicht länger Opazitätsänderungen, die nach einem solchen Punkt unendlicher Opazität auftreten, wiedergeben kann. Ansätze mit Integralfunktionen sind auch dann nur eingeschränkt nutzbar, wenn Approximationen äußerst hoher Qualität erforderlich sind.

Seien im Folgenden $\alpha_i$ und $C_i$ die Opazitäten und Farbkoeffizienten für eine Abtastlänge d und $\alpha_i'$ und $C_i'$ die Opazitäten und Farbkoeffizienten für dieselben Start- und Endwerte, aber bezüglich einer unterschiedlichen Abtastlänge d'. Es ist nun eine Klasse von Algorithmen bekannt, die vorschlagen, eine zweidimensionale Vorabintegrationstabelle zu verwenden, die $C(s_f, s_b, d)$ und $\alpha_i(s_f, s_b, d)$ für die Abtastlänge d zur Verfügung stellt, woraufhin die Werte C' und $\alpha'$ für eine andere beliebige Abtastlänge d' dennoch aus dieser Tabelle ermittelt werden sollen. Derartige Algorithmen sind beispielsweise den Veröffentlichungen von S. Röttger et al., "Smart Hardware-Accelerated Volume Rendering", Proceedings of EG/IEEE TCVG Symposium on Visualization VisSym '03 (2003), Seite 231-238 (im Folgenden [Röttger2]), und J. P. Schulze et al., Integrating pre-integration into the shear-warp algorithm", Proceedings Volume Graphics 2003 (2003), Seiten 109-118 (im Folgenden [Schulze]), beschrieben.

Interessant und auch für die vorliegende Erfindung nützlich ist die dortige Erkenntnis, dass die Berechnung der Opazitätskoeffizienten $\alpha_i'$ durchgeführt werden kann, ohne dass eine Approximation verwendet werden muss, denn es gilt die Beziehung

$$1 - \alpha_i' = (1 - \alpha_i)^{d'/d} \qquad (7)$$

zwischen $\alpha_i$ und $\alpha_i$', vgl. beispielsweise [Röttger2] für einen Beweis. Unglücklicherweise existiert kein entsprechender Zusammenhang für die Farbkoeffizienten. Eine grobe Abschätzung, die die Selbstabschwächung vernachlässigt, wurde in [Röttger1] angegeben:

$$C_i' \approx C_i \frac{d'}{d} \qquad . \qquad\qquad\qquad (8)$$

Wird die Gleichung (8) verwendet, um Farbkoeffizienten für andere Abtastlängen d' zu berechnen, treten äußerst starke Artefakte gemeinsam mit einer Abdunklung der Farben im Anzeigedatensatz auf. Daher wurde in [Schulze] eine mathematische Gleichung hergeleitet, die deutlich besser geeignet ist, die korrekten Farbkoeffizienten zu approximieren. Die dortige Idee ist es, den speziellen Fall des Volumenrenderintegrals zu betrachten, in dem die Auslöschungsdichte und die Farbdichte konstant sind. Nutzt man die Lösung dieses speziellen Falls als eine Approximation des allgemeinen Falls, ergibt sich die Näherung

$$C_i' \approx C_i \frac{\alpha_i'}{\alpha_i} = C_i \frac{1-(1-\alpha_i)^{d'/d}}{1-(1-\alpha_i)} \qquad\qquad\qquad (9)$$

für den Fall $\alpha_i$ ungleich Null, wobei die Gleichheit nicht für allgemeine Farb- und Auslöschungsfunktionen gilt. Ist $\alpha_i$ gleich Null, gelangt man durch Anwendung der Regel von L'Hospital auf (9) wiederum zur Gleichung (8).

Die vorteilhafte Eigenschaft dieses Ansatzes ist es, dass der allgemeine Vorabintegrationsfall für beliebige Abtastlängen durch einen Algorithmus approximiert wird, der lediglich eine zweidimensionale Vorabintegrationstabelle anstatt einer dreidimensionalen Vorabintegrationstabelle benötigt. Diese einfache Ausgestaltung bringt jedoch Nachteile mit sich. Unter Verwendung dieses Ansatzes treten verschiedenste RenderArtefakte auf, insbesondere in Bereichen, in denen die Opazität hoch ist. Dies rührt von der Tatsache her, dass dieser Ansatz lediglich eine Approximation für den Fall allgemeiner Farb- und Auslöschungsfunktionen ist.

Es besteht ein interessanter Zusammenhang zwischen den Ansätzen, die Integralfunktion benutzen, und den Korrekturgleichungen (8) und (9). Die Approximationen für die Farbkoeffizienten, welche auf den Integralfunktionen basieren, können auch genutzt werden, um Gleichungen abzuleiten, die die Berechnung von Opazitäten und Farbkoeffizienten für eine zweite Abtastlänge aus Opazitäten und Farbkoeffizienten für eine erste Abtastlänge erlauben. Nutzt man die Integralformeln von [Engel], gelangt man für die Farbkoeffizienten zu Gleichung (8), während man im Fall von [Krauss2] zur Gleichung (9) gelangt.

Ein Algorithmus, der eine hochqualitative Farbkorrektur für allgemeine Abtastlängen erlaubt, wurde in einer Veröffentlichung von Guthe et al., "High-quality unstructured volume rendering on the PC platform", Proceedings Graphics Hardware 2002 (2002), Seiten 119-125 (im Folgenden [Guthe]), veröffentlicht. Dieser Algorithmus nutzt die Tatsache aus, dass zum Erreichen einer hochqualitativen Korrektur der Farbkoeffizienten für unterschiedliche Abtastlängen eine einzige Vorabintegrationstabelle nicht ausreicht. Dort wird vorgeschlagen, mehrere Vorabintegrationstabellen normalisierter Chromatizität $C_i/\alpha_i$ für unterschiedliche feste Abtastlängen zu berechnen und den Fall allgemeiner Abtastlängen d' durch Verwendung eines Interpolationspolynoms und Skalierung mit der korrigierten Opazität $\alpha$' zu approximieren. Das bedeutet, dass zur Approximierung der Farbkoeffizienten für die Abtastlänge d' n zweidimensionale Vorabintegrationstabellen normalisierter Chromatizität für unterschiedliche Abtastlängen erzeugt werden müssen und Werte aus allen diesen n-Tabellen abgerufen werden müssen, um sie mit einem Polynom des Grades (n-1) zu interpolieren. Das Ergebnis wird dann mit der Opazität $\alpha$' skaliert, welche entsprechend den anderen Ansätzen unmittelbar durch die Nutzung der Gleichung (7) berechnet werden kann.

Gemäß [Guthe] ist das minimale n, das ihr Ansatz benötigt, um eine gute Approximationsqualität zu erreichen, wenigstens n=3, das bedeutet, wenigstens drei Vorabintegrationstabellen müssen erzeugt werden, wonach beim Volumenrendern aus allen diesen Tabellen abgerufen werden muss und interpoliert werden muss. Eine weitere Erhöhung von n erhöht die mathematische Qualität der numerischen Approximation weiter, wobei jedoch gleichzeitig die Zahl der erforderlichen Vorabintegrationstabellen und die Zahl der Zugriffe auf die Tabellen steigen.

Nachdem gemäß [Guthe] die normalisierte Chromatizität interpoliert wird und das Ergebnis mit der korrigierten Opazität $\alpha$' korrigiert wird, kann ihr Ansatz als eine Erweiterung des Ansatzes gemäß [Schulze] verstanden werden, worin der letztere als der Trivialfall n=1 verstanden werden kann. In diesem Fall würde lediglich die normalisierte Chromatizität für die Abtastlänge d mit der korrigierten Opazität $\alpha$' korrigiert werden, was unmittelbar zur Gleichung (9) führt.

Zusammenfassend kann festgehalten werden, dass zur Zeit wenigstens drei Farbintegrationstabellen erforderlich sind, um hochqualitative Farbkoeffizienten für den Fall allgemeiner Abtastlängen zu ermitteln, was hohe Anforderungen an Speicherplatz und Zugriffsmöglichkeiten auf die Tabellen sowie einen hohen Aufwand zur Ermittlung der Tabellen mit sich bringt und zudem bezüglich der Qualität noch Verbesserungsspielraum bietet.

Der Erfindung liegt daher die Aufgabe zugrunde, ein Verfahren zum Volumenrendern mit Vorabintegration anzugeben, welches eine höhere Qualität des Anzeigedatensatzes und insbesondere auch eine aufwandsärmere und/oder schnellere Berechnung erlaubt.

Zur Lösung dieser Aufgabe sind erfindungsgemäß ein Verfahren, eine Recheneinrichtung und ein Computerprogramm mit den Merkmalen der nebengeordneten Ansprüche vorgesehen. Vorteilhafte Ausgestaltungen ergeben sich aus den Unteransprüchen.

Im Rahmen eines erfindungsgemäßen Verfahrens werden zur Auswertung des Volumenrenderintegrals folgende Schritte durchgeführt:

- basierend auf einer Unterteilung der bezüglich einer festen, von der Wunschabtastlänge unabhängigen, vorgegebenen Vorgabeabtastlänge gegebenen Integrationslänge in wenigstens zwei Unterabschnitte, die durch wenigstens einen Unterteilungsparameter beschrieben werden, Bereitstellen einer Zahl, die der Anzahl der Unterabschnitte entspricht, von Vorabintegrationstabellen, von denen sich wenigstens die Zahl minus Eins auf Integrationen über unterschiedliche Unterabschnitte beziehen, in denen jeweils einem Startwert und einem Endwert des Anzeigeparameters eine zur Berechnung eines Beitrags des Volumenrenderintegrals zu verwendende Vorgabeabtastlängen-Opazität und wenigstens ein Vorgabeabtastlängen-Farbkoeffizient zugeordnet sind,
- für jeden Beitrag des Volumenrenderintegrals Ermittlung der Vorgabeabtastlängen-Opazitäten und der Vorgabeabtastlängen-Farbkoeffizienten aus den Vorabintegrationstabellen und Berechnen der dritten, auf die Wunschabtastlänge umgerechneten Opazitäten aus den jeweiligen Vorgabeabtastlängen-Opazitäten sowie dem Verhältnis aus Wunschabtastlänge und Vorgabeabtastlänge und der dritten Farbkoeffizienten aus den Vorgabeabtastlängen-Opazitäten, den Vorgabeabtastlängen-Farbkoeffizienten sowie dem Verhältnis aus Wunschabtastlänge und Vorgabeabtastlänge, und
- Ermitteln des Volumenrenderintegrals aus den Beiträgen.

Konkret werden dabei die dritten Opazitäten nach der Formel (7) ermittelt und die dritten Farbkoeffizienten nach der im Rahmen der vorliegenden Erfindung neu entwickelten Formel (bzw. natürlich Derivaten dieser Formel)

$$ C'(0,1) = \sum_{i=0}^{n} C(\lambda_i, \lambda_{i+1}) \frac{1-T(\lambda_i,\lambda_{i+1})^x}{1-T(\lambda_i,\lambda_{i+1})} \prod_{j=0}^{i-1} T(\lambda_j, \lambda_{j+1})^x \qquad (10) $$

berechnet, wobei
$\alpha'(0,1)$ die dritte Opazität über die gesamte Integrationslänge von 0 bis 1,
$\alpha(0,1)$ die ggf. auch als Vorgabeabtastlängen-Opazität vorhandene Opazität für die gesamte Integrationslänge von 0 bis 1 für die Vorgabeabtastlänge,
$C'(0,1)$ den dritten Farbkoeffizienten über die gesamte Integrationslänge von 0 bis 1,
$\lambda_i$ als Unterteilungsparameter geordnete Zahlen, die $0 \le \lambda_1 \le \lambda_2 \le ... \le \lambda_n \le 1$ erfüllen, mit der Konvention, dass $\lambda_0 = 0$ und $\lambda_{n+1} = 1$ ist,
$C(\lambda_i, \lambda_{i+1})$ den Vorgabeabtastlängen-Farbkoeffizienten für den Unterabschnitt zwischen $\lambda_i$ und $\lambda_{i+1}$,
$T(\lambda_i, \lambda_{i+1})=1-\alpha(\lambda_i,\lambda_{i+1})$ die Vorgabeabtastlängen-Transparenz für den Unterabschnitt zwischen $\lambda_i$ und $\lambda_{i+1}$, mit $\alpha(\lambda_i, \lambda_{i+1})$ den entsprechenden Vorgabeabtastlängen-Opazitäten, und

$$ x = \frac{d'}{d} $$ das Verhältnis der Wunschabtastlänge d' zur Vorgabeabtastlänge d

bezeichnen. Nachdem die im Folgenden noch genauer erläuterten Zusammenhänge der Formeln (28) und (29) unten gelten, können die Vorgabeabtastlängen-Farbkoeffizienten C(0,1) und die Vorgabeabtastlängen-Transparenzen T(0,1) und somit -Opazitäten $\alpha(0,1)$ problemlos eingeführt werden.

Eine bevorzugte Ausgestaltung der Erfindung sieht konkret vor, dass als Vorabintegrationstabellen eine erste Vorabintegrationstabelle mit ersten Opazitäten und ersten Farbkoeffizienten ermittelt wird, deren Integrale über die gesamte Integrationslänge ausgewertet wurden, und die Zahl minus Eins an zweiten Vorabintegrationstabellen mit zweiten Opazitäten und zweiten Farbkoeffizienten ermittelt wird, deren Integrale jeweils für einen der ersten Zahl minus Eins Unterabschnitte ausgewertet wurden, wobei sich die dritten Opazitäten aus den ersten Opazitäten sowie dem Verhältnis aus Wunschabtastlänge und Vorgabeabtastlänge und die dritten Farbkoeffizienten den ersten und zweiten Opazitäten, den ersten und zweiten Farbkoeffizienten sowie dem Verhältnis aus Wunschabtastlänge und Vorgabeabtastlänge ergeben. In diesem Fall werden die Vorgabeabtastlänge-Opazitäten und -Farbkoeffizienten also in erste und zweite Opazitäten bzw. Farbkoeffizienten klassifiziert. Hierbei ergeben sich in vielen weiteren Ausgestaltungen der vorliegenden Erfindung deutliche Vorteile, wenn zunächst die erste Vorabintegrationstabelle berechnet werden kann und bei der Berechnung der zweiten Vorabintegrationstabelle(n) bereits vorliegt, worauf im Folgenden noch genauer eingegangen wird. Es sei darauf hingewiesen, dass sich selbstverständlich die jeweils "fehlenden" Größen aufgrund der Linearität der Integrale (und ggf. auch aufgrund anderer Zusammenhänge) problemlos ermitteln ließen, mithin beispielsweise eine Größe für einen Unterabschnitt aus der entsprechenden ersten Größe und den zweiten Größen für alle anderen Unterabschnitte, wie oben bezüglich der Gleichung (10) bereits angedeutet.

Der Einfachheit halber und da die im folgenden dargestellten Ausführungsbeispiele der Erfindung meist eine erste und wenigstens eine zweite Vorabintegrationstabelle verwenden werden, sollen die folgenden Darlegungen sich ohne Beschränkung der Allgemeinheit auf diese Fälle beziehen, in denen Vorgabeabtastlängen-Opazitäten und Vorgabeabtastlängen-Farbkoeffizienten als erste und zweite Opazitäten und erste und zweite Farbkoeffizienten vorliegen.

Durch die Erfindung wird mithin ein gänzlich neuer Ansatz vorgeschlagen, der auf der Erkenntnis beruht, dass durch eine Unterteilung des durch die Integrationslänge definierten Integrationsintervalls für die den Opazitäten und den Farbkoeffizienten zugrundeliegenden Integrale eine deutlich verbesserte Approximation für Farbkoeffizienten anderer Abtastlängen erzielt werden kann, so dass sich eine deutlich verbesserte Qualität des Anzeigedatensatzes ergibt. In dem Fall, dass die Integrationslänge in genau zwei Unterabschnitte zerlegt wird, ist es mit besonderem Vorteil zusätzlich ausreichend, nur zwei zweidimensionale Vorabintegrationstabellen zu verwenden, was den benötigten Aufwand für die Berechnung der Vorabintegrationstabellen, die Speicherung der Vorabintegrationstabellen und den Zugriff auf die Vorabintegrationstabellen genauso wie den eigentlichen Vorgang des Volumenrenderns deutlich vereinfacht, so dass eine verbesserte Realisierung in Echtzeit auf den meisten Rechenrichtungen, durch die das Verfahren in Hardware und/oder Software realisiert ist, implementiert werden kann. Eine zugrunde liegende Motivation der vorliegenden Erfindung war es, zu überprüfen, ob eine hochqualitative Erzeugung eines Anzeigedatensatzes nicht auch aus zwei Vorabintegrationstabellen, die beide zweidimensional sind, möglich ist, wobei sich jedoch gezeigt hat, dass der hier vorgestellte Ansatz erweitert werden kann, um bei der Verwendung von mehr als zwei Vorabintegrationstabellen eine weitere Verbesserung der Bildqualität zu erreichen, die jedoch bereits im Fall von zwei zweidimensionalen Farbintegrationstabellen gegenüber Ansätzen wie [Guthe] verbessert sein kann, insbesondere dann, wenn, wie im Folgenden noch näher erläutert werden wird, die Unterteilungsparameter aufgrund einer Optimierung bestimmt werden.

Es sei bereits an dieser Stelle allgemein darauf hingewiesen, dass der Unterteilungsparameter für die einzelnen Einträge der zweiten Vorabintegrationstabelle(n) nicht zwangsläufig gleich sein muss, worauf ebenso im Folgenden noch näher eingegangen werden wird. Der Unterteilungsparameter bzw. dessen Ermittlung, insbesondere im Fall einer Optimierung, geht lediglich implizit in die dortigen zweiten Opazitäten und Farbkoeffizienten ein.

Um die Erfindung zu motivieren und die verwendeten Formeln herzuleiten, sei zunächst der Ansatz von [Schulze] nochmals einer genaueren Untersuchung unterzogen.

Hierzu betrachten wir zunächst nochmals das Volumenrenderintegral, Gleichung (1), das ja auch durch die vorliegende Erfindung approximiert werden soll, für den Fall beliebiger $\tau(s)$ und einer konstanten Farbfunktion c(s)=c. Das Volumenrenderintegral über ein Intervall [a,b] wird dann

$$I = c \int_a^b \tau\big(s(z)\big) \exp\big(- \int_a^z \tau\big(s(t)\big)dt\big)dz \qquad . \qquad (1a)$$

Nehmen wir nun an, dass die Funktion s(z) eine lineare Funktion ist. Wie von Max in [Max] angemerkt wurde, kann in diesem speziellen Fall das Integral unter Verwendung der Kettenregel analytisch gelöst werden, was zu einer simplen Gleichung bezüglich der Farbkoeffizienten $C_i$ und der Opazitäten $\alpha_i$ führt:

$$C_i = c\alpha_i \qquad . \qquad (11)$$

Analysiert man nun die Opazitäten und Farbkoeffizienten für eine Abtastlänge d und eine Abtastlänge d' und verwendet man Gleichung (7), erhält man

$$C_i' = c\alpha_i' = C_i \frac{\alpha_i'}{\alpha_i} = C_i \frac{1-(1-\alpha_i)^{d'/d}}{1-(1-\alpha_i)} \qquad . \qquad (12)$$

Dies entspricht exakt der Gleichung (9), wobei nur die Annahme getroffen wurde, dass c(s) konstant sei, $\tau(s)$ jedoch beliebig gewählt werden kann. In der Ableitung von (9) bei [Schulze] wurde jedoch angenommen, dass die Farbfunktion und die Opazitätsfunktion konstant seien.

Die wichtige Konsequenz aus diesen Betrachtungen ist, dass dann, wenn die Formel (9) als Approximation zur Korrektur der Farbkoeffizienten angewandt wird, diese nicht nur die korrekten Resultate für konstante Farbfunktion und konstante Auslöschungsfunktion liefert, sondern auch für die viel breitere Klasse von Fällen, in denen lediglich die Farbfunktion konstant ist, die Auslöschungsfunktion jedoch eine beliebige Funktion ist. Mithin wird die Korrekturformel (9) als ein wichtiger Baustein des im Folgenden weiter motivierten, erfindungsgemäßen Ansatzes verwendet.

Bevor dessen Details genauer dargestellt werden sollen, sollen zunächst einige zugrundeliegende Ideen dargestellt werden. Wird der in [Schulze] beschriebene Ansatz zur Ermittlung von Farbkoeffizienten $C_i'$ bei einer Abtastlänge d' aus den Opazitäten und Farbkoeffizienten für eine Abtastlänge d unter Verwendung der Formel (9) verwendet, ist das Ergebnis ein Algorithmus, der sehr einfach ist, aber unglücklicherweise keine hinreichend gute Bildqualität liefert. Sei beispielsweise angenommen, dass die Opazität innerhalb der Integrationslänge mit einem transparenten Wert der Farbe A beginnt und später vollständig undurchlässig wird, und zwar bei einer anderen Farbe B. Gleichung (9) würde in einer solchen Situation stets Ergebnisse produzieren, in denen $C_i'=C_i$, was nicht einmal ansatzweise die transparenten Beiträge basierend auf der Farbe A berücksichtigt.

Es ist mithin festzustellen, dass eine zusätzliche Information fehlt, die detailgenauer wiedergibt, wie sich die zugrundeliegende Transferfunktion verhält und nicht nur absolute Werte $\alpha_i$ und $C_i$ betrachtet. Um zu einem praktisch anwendbaren Verfahren zu gelangen, ist es jedoch wichtig, dass der Speicherplatz für die zusätzliche Information so klein wie möglich gehalten wird, um die resultierende Menge von Eingangsdaten minimal zu halten. Ausgangspunkt für die Erfindung war also die Suche nach der besten Zusatzinformation, die in einem möglichst kleinen Datenspeicher vorgehalten werden kann. Mathematisch betrachtet bedeuten die Worte "beste Information", dass eine extremale Lösung für eine Metrik gesucht wird, die Lösungen mit maximalem Informationsgehalt bevorzugt.

Es sei angemerkt, dass die in [Guthe] beschriebene Lösung ebenso zusätzliche Informationen benutzt, aber drei Vorabintegrationstabellen als Eingabe benötigt, um hochqualitative Resultate zu erreichen. Während das Streben der vorliegenden Erfindung auch einer Steigerung der Qualität im allgemeinen Fall gilt, dient ein besonderes Interesse jedoch der Frage, welche Approximationsqualität möglich ist, wenn lediglich zwei Vorabintegrationstabellen eingesetzt werden. Daher wird im Folgenden beispielhaft zunächst ein Fall betrachtet, der die Verwendung von lediglich zwei Vorabintegrationstabellen erlaubt, mithin der ersten Vorabintegrationstabelle und nur einer zweiten Vorabintegrationstabelle. Überraschenderweise hat sich gezeigt, dass dieser Ansatz mit nur zwei Vorabintegrationstabellen bereits eine äußerst hohe Bildqualität erreicht, im Gegensatz zur resultierenden Bildqualität von [Guthe], wenn lediglich zwei Vorabintegrationstabellen eingesetzt werden.

Eine weitere Voraussetzung, die während des Erfindungsprozesses berücksichtigt wurde, war, dass dann, wenn zusätzliche Information genutzt wird, der resultierende Algorithmus nicht die vorteilhafte Eigenschaft brechen sollte, dass für einen großen Anteil der Transferfunktionen die Gleichung (9) bereits das korrekte Ergebnis liefert. Mathematisch versteht sich eine solche Eigenschaft eines Algorithmus als "Konsistenz", so dass beispielsweise ein Interpolationsalgorithmus konsistent genannt wird, falls dasselbe Ergebnis erhalten wird, wenn der gegebene Satz von Interpolationspunkten um einen neuen Punkt auf der interpolierten Kurve ergänzt wird.

Im Folgenden soll nun die vorliegende Erfindung in einem Fall illustrativ dargestellt werden, wobei auf die Verallgemeinerung später eingegangen werden soll. So werden vorliegend, wie bereits angesprochen, zunächst nur zwei Unterabschnitte der Integrationslänge verwendet. Auch wird weiter von einer linearen Näherung der Funktion s(z) innerhalb der Vorgabeabtastlänge ausgegangen, wobei sich der Ansatz selbstverständlich auch auf andere Ansätze für die Mapping-Funktion s(z) übertragen lässt, beispielsweise auf quadratische Ansätze oder dergleichen, worauf aber hier nicht näher eingegangen werden soll.

Ausgegangen werden soll von einer Verallgemeinerung der Gleichungen (5) und (6), indem sie nicht über das Intervall [0,1], sondern über ein generalisiertes Intervall [$\lambda_1$, $\lambda_2$] definiert seien, so dass sich die folgenden Gleichungen (13) und (14) ergeben.

$$\alpha(\lambda_1, \lambda_2) = 1 - \exp\left(-\int_{\lambda_1}^{\lambda_2} \tau\left((1-\omega)s_f + \omega s_b\right) d \, d\omega\right) \qquad (13)$$

$$C(\lambda_1, \lambda_2) = \int_{\lambda_1}^{\lambda_2} \tau\left((1-\omega)s_f + \omega s_b\right) c\left((1-\omega)s_f + \omega s_b\right) \exp\left(-\int_{\lambda_1}^{\omega} \tau\left((1-t)s_f + t s_b\right) d \, dt\right) d \, d\omega \qquad (14)$$

Die Gleichungen (5) und (6) sind also spezielle Fälle, in denen $\lambda_1=0$ und $\lambda_2=1$.

Nehmen wir nun an, dass $\lambda_1$ eine Zahl ist, die $0\leq\lambda_1\leq1$ erfüllt, und definieren wir ferner die Transparenz für ein Intervall als

$$T(\lambda_1, \lambda_2) = 1 - \alpha(\lambda_1, \lambda_2) \qquad . \tag{15}$$

Es sei nun angenommen, dass die Integrationslänge [0,1] in zwei Unterabschnitte unterteilt sei, beschrieben durch den Unterteilungsparameter $\lambda_1$. Dann beschreiben die folgenden Gleichungen (16) und (17) den Zusammenhang zwischen den Farbkoeffizienten und den Opazitäten der Unterabschnitte [0, $\lambda_1$] und [$\lambda_1$, 1] mit den (ersten) Farbkoeffizienten und (ersten) Opazitäten des Gesamtintervalls [0,1].

$$T(0,1) = T(0, \lambda_1) * T(\lambda_1, 1) \tag{16}$$

$$C(0,1) = C(0, \lambda_1) + T(0, \lambda_1)C(\lambda_1, 1) \tag{17}$$

Dabei ist die Gleichung (17) eine Konsequenz der Gleichung (4) für allgemeine Subintervalle.

Seien nun mit T und C die vorabintegrierten Transparenzen und Farbkoeffizienten für die Vorgabeabtastlänge d und mit T' und C' entsprechende Werte für eine Wunschabtastlänge d' bezeichnet. Dann erfüllt der Farbkoeffizient C'(0, $\lambda_1$) wegen (17)

$$C'(0,1) = C'(0, \lambda_1) + T'(0, \lambda_1)C'(\lambda_1, 1) \qquad . \tag{18}$$

Im Folgenden soll nun die Konvention genutzt werden, dass

$$x = \frac{d'}{d} \tag{19}$$

das Verhältnis zwischen den Abtastlängen beschreibe. Die Korrekturgleichung (9) kann nun auf jeden der Unterabschnitte [0, $\lambda_1$] und [$\lambda_1$, 1] anstatt der vollen Integrationslänge [0, 1] angewandt werden, um C' (0, $\lambda_1$) und C' ($\lambda_i$, 1) in Gleichung (18) zu approximieren. Wird ferner (7) ausgenutzt, um T'(0, $\lambda_1$) zu ersetzen, gelangt man zur folgenden Approximation für den (letztlich gesuchten) Farbkoeffizienten C'(0, 1):

$$C'(0,1) \approx C(0, \lambda_1)\frac{1-T(0,\lambda_1)^x}{1-T(0,\lambda_1)} + C(\lambda_1, 1)T(0,\lambda_1)^x \frac{1-T(\lambda_1,1)^x}{1-T(\lambda_1,1)} \qquad . \tag{20}$$

Nutzt man nun (16) und (17) aus, lassen sich T($\lambda_1$, 1) und C($\lambda_1$, 1) ersetzen und man gelangt zu

$$C'(0,1) \approx C(0, \lambda_1)\frac{1-T(0,\lambda_1)^x}{1-T(0,\lambda_1)} + (C(0,1) - C(0,\lambda_1))\frac{T(0,\lambda_1)^x - T(0,1)^x}{T(0,\lambda_1) - T(0,1)} \qquad . \tag{21}$$

(20) stellt letztlich den Spezialfall von (10) für eine Unterteilung der Integrationslänge in zwei Unterabschnitte dar, wobei in (21) die Koeffizienten für die gesamte Integrationslänge [0,1] mittels (16) und (17) eingeführt wurden (vgl. hierzu auch unten für den allgemeinen Fall (28) und (29)), so dass eine vorteilhafte Ausgestaltung der vorliegenden Erfindung vorsieht, dass die Integrationslänge in genau zwei Unterabschnitte zerlegt wird, wobei sich die genau eine zweite Vorabintegrationstabelle auf den ersten Unterabschnitt bezieht und sich die dritten Farbkoeffizienten nach der Formel (21) berechnen. C(0, $\lambda_1$) und $\alpha$(0, $\lambda_1$) stellen mithin die zweiten Farbkoeffizienten und die zweiten Opazitäten dar, wobei es aufgrund des einfachen Zusammenhangs (15) unwesentlich ist, ob die Opazitäten unmittelbar oder mittelbar als Transparenzen gespeichert werden.

Die Gleichung (21) ist mit Sicherheit exakt für den speziellen Fall, in dem die Farbfunktion eine stückweise konstante Funktion ist, die jeweils in den Intervallen [0, $\lambda_1$] und [$\lambda_1$, 1] konstant ist. In diesem Fall kann die Auslöschungsfunktion sogar beliebig sein. Im Fall allgemeiner Farbfunktionen muss (21) als eine Approximation gesehen werden.

Die Qualität der Approximation hängt von der Wahl des Aufteilungsparameters $\lambda_1$ ab. Zwar ist es grundsätzlich denkbar, für den Aufteilungsparameter $\lambda_1$ einen festen Wert vorzugeben, beispielsweise 0,5, was aber weniger bevorzugt ist. Nachdem nämlich $\lambda_1$ gerade einen Freiheitsgrad darstellt und frei gewählt werden kann, bietet es sich an, die optimale Wahl zu treffen, also den Wert von $\lambda_1$ zu verwenden, der die beste Approximation liefert.

Mithin sieht eine besonders bevorzugte Ausgestaltung der vorliegenden Erfindung vor, dass der wenigstens eine Unterteilungsparameter in einem auf die Minimierung des Abstands zwischen durch exakte Integration ermittelten dritten Farbkoeffizienten für eine Wunschabtastlänge und aus Vorgabeabtastlängen-Opazitäten, insbesondere also ersten und zweiten Opazitäten, und Vorgabeabtastlängen-Farbkoeffizienten, insbesondere also ersten und zweiten Farbkoeffizienten, für die Vorgabeabtastlänge bestimmten dritten Farbkoeffizienten für die Wunschabtastlänge abzielenden Optimierungsverfahren ermittelt wird. Es hat sich gezeigt, dass bei einer derart optimierten Wahl, die für verschiedene Einträge der wenigstens einen zweiten Vorabintegrationstabelle auch unterschiedlich getroffen werden kann, sich eine nochmals dramatische Verbesserung der resultierenden Bildqualität des zweidimensionalen Anzeigedatensatzes erreichen lässt, auch bereits bei der Verwendung von nur zwei Vorabintegrationstabellen, weshalb die konkreten Erläuterungen sich wiederum auf diesen besonders vorteilhaften Fall beziehen.

Sei $C(s_f, s_b, d')$ der exakte, beispielsweise vorabintegrierte Farbkoeffizient für Start- und Endwerte $s_f$, $s_b$, also einen Eintrag der Vorabintegrationstabellen, und eine Abtastlänge d', und sei C'(0, 1) die zugehörige Approximation gemäß Gleichung (21). Dann ist es die Idee des Optimierungsverfahrens, den Aufteilungsparameter $\lambda_1$ so zu wählen, dass der Term

$$| C(s_f, s_b, d') - C'(0,1) | \qquad , \qquad (22)$$

der sich mit (21) zu

$$| C(s_f, s_b, d') - (C(0,\lambda_1)\frac{1 - T(0,\lambda_1)^x}{1 - T(0,\lambda_1)} + (C(0,1) - C(0,\lambda_1))\frac{T(0,\lambda_1)^x - T(0,1)^x}{T(0,\lambda_1) - T(0,1)}) | \qquad (23)$$

ergibt, minimal wird. In dieser Form hängt das Minimierungsproblem auf von dem gewählten Verhältnis x zwischen den Abtastlängen d', d ab. In Untersuchungen wurde jedoch festgestellt, dass das gewählte Verhältnis der Abtastlängen keinen großen Einfluss auf das Ergebnis der Qualität der Approximation hat, so dass vorteilhaft ein fester Wert für x gewählt werden kann, beispielsweise und bevorzugt 0,5, nachdem sich die Potenzfunktionen dann zu einfachen Wurzelausdrücken vereinfachen, die durch die meisten Recheneinrichtung effizienter ausgewertet werden können.

Mit anderen Worten ist zweckmäßig also vorgesehen, dass das Verhältnis x zwischen Wunschabtastlänge und Vorgabeabtastlänge für das Optimierungsverfahren fest, insbesondere als 0,5, vorgegeben wird.

Für x=0,5 wird Gleichung (21) zu

$$C'(0,1) \approx \frac{C(0,\lambda_1)}{1 + \sqrt{T(0,\lambda_1)}} + \frac{(C(0,1) - C(0,\lambda_1))}{\sqrt{T(0,\lambda_1)} + \sqrt{T(0,1)}} \qquad (24)$$

und die Optimierungsgleichung (23) wird zu

$$| C(s_f, s_b, 0.5d) - (\frac{C(0,\lambda_1)}{1 + \sqrt{T(0,\lambda_1)}} + \frac{(C(0,1) - C(0,\lambda_1))}{\sqrt{T(0,\lambda_1)} + \sqrt{T(0,1)}}) | \qquad . \qquad (25)$$

Zwar ist es nun grundsätzlich denkbar, zur Durchführung des Optimierungsverfahrens eine weitere Vorabintegrationstabelle für x=0,5 zu ermitteln, da diese für die Optimierung mit der Formel (25) benötigt wird. Dies ist jedoch weniger bevorzugt, vor allem, da eine Lösung existiert, die die Optimierung deutlich vereinfacht.

Dabei wird ausgenutzt, dass in der Formel (25) der Term $C(s_f, s_b, 0.5d)$ überhaupt nicht von dem (im weiter der Einfachheit betrachteten Fall zweiter Unterabschnitte) Unterteilungsparameter $\lambda_1$ abhängt, so dass in einem Fall, in dem der Ausdruck in den Betragsstrichen von (25) immer größer als Null ist, im Prinzip nach dem Maximum des Ausdrucks in den Betragsstrichen gesucht wird. Verschiebt man also die durch den Ausdruck in den Betragsstrichen beschriebene Kurve geschickt so, dass sie immer oberhalb von Null liegt, ist $C(s_f, s_b, 0.5d)$ nicht mehr relevant und das Problem vereinfacht sich auf eine einfache Maximumssuche. Definiert man also eine Funktion

$$f(\lambda_1) = | \frac{C(0,\lambda_1)}{1 + \sqrt{T(0,\lambda_1)}} + \frac{(C(0,1) - C(0,\lambda_1))}{\sqrt{T(0,\lambda_1)} + \sqrt{T(0,1)}} - \frac{C(0,1)}{1 + \sqrt{T(0,1)}} | \qquad (26)$$

mit f $(\lambda_1)$ =0 für $\lambda_1$=0 und $\lambda_1$=1, kann diese als Zielfunktion im Optimierungsverfahren maximiert werden. Auf diese Art kann die Berechnung der Vorabintegrationstabellen vereinfacht werden. Anders ausgedrückt kann vorgesehen sein, dass im Rahmen des Optimierungsverfahrens eine durch Verschiebung positive, unter Weglassen der von dem Unterteilungsparameter unabhängigen, durch Integration ermittelten dritten Farbkoeffizienten definierte Zielfunktion maximiert wird.

Es sei angemerkt, dass diese Ausgestaltung eine besonders einfache Ermittlung der Vorabintegrationstabellen erlaubt. Denn es kann vorgesehen sein, dass vor der Durchführung des Optimierungsverfahrens die erste Vorabintegrationstabelle ermittelt wird, woraufhin unter Nutzung von Integralen der ersten Vorabintegrationstabelle das Optimierungsverfahren während der numerischen Integration zur Ermittlung der wenigstens einen zweiten Vorabintegrationstabelle durchgeführt wird, wobei nach jedem Teilschritt der numerischen Integration überprüft wird, ob für die bis dorthin gebildeten Integrale ein neues Extremum der Zielfunktion aufgefunden wurde und bei Vorliegen eines neuen Extremums diese Integrale abgespeichert werden, so dass nach Durchschreiten der gesamten Integrationslänge die dem Extremum entsprechenden Integrale in der wenigstens einen zweiten Vorabintegrationstabelle gespeichert sind. Zunächst wird also die erste Vorabintegrationstabelle bestimmt. Sodann wird in einem weiteren Schritt zur Ermittlung der wenigstens einen zweiten Vorabintegrationstabelle ein leicht modifizierter Vorabintegrationsalgorithmus durchgeführt, der ausnutzt, dass die numerische Integration auch schrittweise vorgeht, mithin die Integrale über wachsende Partialsummen bestimmt, während die Integrationslänge [0, 1] durchlaufen wird. In jedem dieser Vorabintegrationsschritte liegen Zwischenergebnisse für bestimmte Unterteilungsparameter vor. Diese Zwischenergebnisse werden zusammen mit den schon vorliegenden Werten der ersten Vorabintegrationstabelle genutzt, um zu überprüfen, ob die Zielfunktion f($\lambda_1$) ein neues Maximum erreicht. Ist das der Fall, werden die aktuellen Integralwerte (natürlich gemeinsam mit dem zugehörigen Zielfunktionswert), gegebenenfalls vorliegende frühere Einträge überschreibend, gespeichert und weiter fortgeschritten, bis die Integrationslänge durchlaufen ist. Die dann vorliegenden, gespeicherten Integralwerte werden für dieses Paar von $s_f$, $s_b$ in die zweite Vorabintegrationstabelle übernommen.

Zumindest in dieser konkreten Ausführungsform ist die Komplexität des sich ergebenden Algorithmus mithin in diesem Fall vergleichbar mit der Aufgabe, zwei zweidimensionale Vorabintegrationstabellen zu berechnen, da das Optimierungsproblem leicht in einen üblichen Vorabintegrationsalgorithmus integriert werden kann, der für massiv parallel rechnende Hardware einer Recheneinrichtung entworfen wurde, und die Partialopazitäten und die Partialfarbkoeffizienten in Gleichung (26) ohnehin berechnen muss. Die Auswertung der Gleichung (26) ist mathematisch nicht sonderlich fordernd und verlangt aufgrund der geschickten Wahl von x als 0,5 nur eine einzige nicht konstante Wurzeloperation (Wurzel von t(0, $\lambda_1$)), die auf modernen Recheneinheiten (CPUs) genau wie auf GPUs effizient durchgeführt werden kann.

Würde dieser Optimierungszugang auf den (üblichen) Fall angewendet werden, dass drei Farben (RGB) betrachtet werden, wären in der zweiten Vorabintegrationstabelle drei Farbkoeffizienten, nämlich für Rot, Grün und Blau, und drei unterschiedliche Opazitätswerte ebenso jeweils für Rot, Grün und Blau abzuspeichern. Dies liegt darin begründet, dass das Optimum der Zielfunktion, vgl. beispielsweise Gleichung (26), für jede Farbe unabhängig bestimmt wird, mithin für jede Farbe unterschiedliche Aufteilungsparameter auftauchen könnten. Dies wäre jedoch unerwünscht, denn es würden sechs Werte gespeichert werden, nicht vier, wie es die übliche RGBA-Speicherform erfordern würde. Hierzu kommt, dass das Optimierungsproblem drei Mal gelöst werden müsste, nämlich einmal für jeden Farbkanal $C_R(0, \lambda_1)$, $C_G(0, \lambda_1)$ und $C_B(0, \lambda_1)$ für den Fall eines einzigen Aufteilungsparameters.

Um dieses Problem zu umgehen und das Verfahren weiter zu vereinfachen sowie den erforderlichen Speicherplatz zu reduzieren, sieht eine besonders zweckmäßige Ausgestaltung der vorliegenden Erfindung vor, dass bei der Verwendung von mehreren Farben mit zugeordneten Farbfunktionen das Optimierungsverfahren für alle Farben gleichzeitig unter Verwendung einer Zielfunktion, die sich als Summe der Zielfunktionen der einzelnen Farben ergibt, durchgeführt wird, so dass ein gemeinsamer optimaler Unterteilungsparameter für alle Farben und mithin eine gemeinsame Vorgabeabtastlängen-Opazität bei Integration über Unterabschnitte für alle Farben aufgefunden wird, insbesondere also eine gemeinsame zweite Opazität für alle Farben aufgefunden wird.

Für den RGB-Fall unter Verwendung der Einzelfarben-Zielfunktion in (26) würde sich mithin als neue Zielfunktion

$$f_R(\lambda_1) + f_G(\lambda_1) + f_B(\lambda_1) \qquad\qquad (27)$$

ergeben, worin $f_R$, $f_G$ und $f_B$ die Einzelfarben-Zielfunktionen (26) für den roten, grünen und blauen Kanal sind. Der resultierende optimale Aufteilungsparameter $\lambda_{opt}$ wird dann auf alle drei Farbkanäle $C_R(0, \lambda_{opt})$, $C_G(0, \lambda_{opt})$, und $C_B(0, \lambda_{opt})$ angewandt. Zusammenfassend werden in diesem Fall also zwei RGBA-Vorabintegrationstabellen gespeichert, wobei die erste die Werte
$[C_R(0,1), C_G(0,1), C_B(0,1), \alpha(0,1)]$
und die zweite die aus der Lösung des Optimierungsproblems resultierenden Werte

$[C_R(0,\lambda_{opt}), C_G(0,\lambda_{opt}), C_B(0,\lambda_{opt})\alpha(0,\lambda_{opt})]$
enthält.

Es sei an dieser Stelle sicherheitshalber angemerkt, dass die Ausgestaltungen zur Ermittlung der Vorabintegrationstabellen selbstverständlich unabhängig von einer konkreten Renderingaufgabe eines konkreten Quelldatensatzes sind. Mithin ist der Begriff der Wunschabtastlänge dort nicht als auf einen konkreten Quelldatensatz bezogen zu verstehen, sondern als beliebige, von der Vorgabeabtastlänge unterschiedliche Abtastlänge zu verstehen, die stellvertretend für die gewünschte Umrechenbarkeit auf beliebige Abtastlängen steht. Entsprechend bezieht sich der Begriff des dritten Farbkoeffizienten dort auf den Farbkoeffizienten dieser von der Vorgabeabtastlänge unterschiedlichen Abtastlänge und wurde im Sinne einer allgemeinverständlichen, möglichst klaren Beschreibung gewählt, um den zugrundliegenden Zusammenhang deutlich darzustellen.

Es sei an dieser Stelle, nachdem sich die Herleitungen meist auf den Fall von genau zwei Vorabintegrationstabellen bezogen haben, noch kurz auf die Grundlage des allgemeinen Falls eingegangen, Formel (10), bei dem die Integrationslänge in beliebig viele Unterabschnitte unterteilt wird, mithin beliebig viele Unterteilungsparameter $\lambda_i$ vorgesehen sein können.

Seien $\lambda_1, \lambda_2, ..., \lambda_n$ als Unterteilungsparameter geordnete Zahlen, die $0 \leq \lambda_1 \leq \lambda_2 \leq ... \leq \lambda_n \leq 1$ erfüllen. Die Gleichungen (16) und (17) können dann verallgemeinert werden und man erhält

$$T(0,1) = T(0,\lambda_1) * T(\lambda_1, \lambda_2,) * ... T(\lambda_n, 1) \tag{28}$$

und

$$C(0,1) = \sum_{i=0}^{n} C(\lambda_i, \lambda_{i+1}) \prod_{j=0}^{i-1} T(\lambda_j, \lambda_{j+1}) \qquad , \tag{29}$$

wenn die Benennungskonvention $\lambda_0=0$ und $\lambda_{n+1}=1$ verwendet wird, wie oben bereits angedeutet.

Gleichung (10) als Analogon zur Gleichung (21), die beschreibt, wie C'(0,1) approximiert werden kann, kann analog für den allgemeinen Fall abgeleitet werden. Das Minimierungsproblem (25) und das Maximierungsproblem (26) können ebenso vollständig analog formuliert werden, mit dem Unterschied, dass das Optimierungsproblem nun mehrdimensional ist. Es ergibt sich für das Minimierungsproblem als Analogon zur Formel (25)

$$\left| C(s_f, s_b, 0.5d) - \left( \sum_{i=0}^{n} C(\lambda_i, \lambda_{i+1}) \frac{1}{1+\sqrt{T(\lambda_i, \lambda_{i+1})}} \prod_{j=0}^{i-1} \sqrt{T(\lambda_j, \lambda_{j+1})} \right) \right| \tag{30}$$

Als Ergebnis dieses allgemeinen Szenarios kann ein Algorithmus formuliert werden, der (n+1) zweidimensionale Vorabintegrationstabellen verwendet, nämlich zunächst die erste Vorabintegrationstabelle, die vorabintegrierte Werte für die Opazität und die Farbkoeffizienten über die gesamte Integrationslänge für eine Abtastlänge d, die Vorgabeabtastlänge, enthält. Diese kann über die Formeln (28) und (29), die die Opazität und die Farbkoeffizienten für die gesamte Integrationslänge [0, 1} einführen, genutzt werden. Ferner werden dann n weitere, zweite Vorabintegrationstabellen verwendet, die Farbintegrationsresultate für Unterabschnitte enthalten, mithin für die Opazität $\alpha(\lambda_j), \lambda_{j+1})$ und $C(\lambda_j, \lambda_{j+1})$, die den Unterteilungsparametern A zugeordnet sind, die insbesondere als Lösung des Optimierungsverfahrens aufgefunden wurden. Der RGB-Farbfall kann analog zum dargestellten einfachen Fall, worin n=1 gewählt wurde, realisiert werden.

In einer Randbemerkung sei festgestellt, dass für den theoretischen Fall n=0 der Ansatz von [Schulze] erreicht wird. Während also der Ansatz zur Erzeugung hochqualitativer Farbkoeffizienten-Approximationen sich vollständig vom Ansatz in [Guthe] unterscheidet, ist es interessant, anzumerken, dass beide sich in ihrer trivialen Form auf den Ansatz von [Schulze] vereinfachen.

Eine äußerst beliebte Variante des direkten Volumenrendern ist die Gradienten-Opazitätsmodulation ("gradient opacity modulation").

Dabei wird in dem Volumenrenderintegral (1) die Auslöschungsdichtefunktion $\tau(s)$ während des Renderns mit einer Funktion f moduliert, die von der Gradientenstärke im Quelldatensatz abhängt, das bedeutet, die modulierte Auslöschungsfunktion $\tau(s)$ wird dann:

$$\tau(s) \to f(|\nabla s(x)|)\ \tau(s) \tag{31}$$

Soll nun vorabintegriertes Volumenrendern genutzt werden, bedeutet diese Modulation in der Theorie, dass eine fünfdimensionale Vorabintegrationstabelle für den Fall allgemeiner Abtastlängen verwendet werden müsste, nachdem für jedes Intervall nun auch zusätzliche Start- und Endwerte der Funktion f in (31) in Betracht gezogen werden müssten. In einer Druckschrift von S. Röttger et al., "Spatialized Transfer Funktions", EuroVis 2005, Seiten 271-278, im Folgenden [Röttger3], wurde angemerkt, dass diese Vorabintegrationstabelle um eine Dimension reduziert werden kann, wenn angenommen wird, dass der Gradient innerhalb eines Intervalls annähernd konstant bleibt, was in Betracht zieht, dass die Frequenzen der Funktion f der Formal (31) üblicherweise deutlich kleiner sind als die aus der Farbverteilung der Transferfunktion resultierenden Frequenzen.

Analysiert man die Gleichungen (5) und (6) im Fall der Gradienten-Opazitätsmodulation, stellt man fest, dass die resultierenden Gleichungen äußerst ähnlich zum Fall allgemeiner Abtastlängen sind, wobei der einzige Unterschied darin besteht, dass der Faktor d durch

$$df(|\nabla s(x)|)$$

ersetzt wird. Das bedeutet jedoch, dass das Gradientenmodulationsszenario auf das reguläre Vorabintegrationsszenario reduziert werden kann, wenn der Modulationsfaktor mit der Vorgabeabtastlänge kombiniert wird. Dies erlaubt die weitere Reduzierung des verbleibenden vierdimensionalen Falls auf den dreidimensionalen Fall, auf den die vorliegende Erfindung angewandt werden kann, die im bevorzugten Fall lediglich zwei zweidimensionale Vorabintegrationstabellen benötigt. Mithin schlägt eine vorteilhafte Weiterbildung der Erfindung vor, dass eine abhängig vom Betrag des dreidimensionalen Gradienten des Anzeigeparameters modulierte Auslöschungsfunktion für das Volumenrenderintegral verwendet wird, wobei bei dessen Auswertung zur Berücksichtigung der Modulation der Modulationsfaktor auf das Verhältnis von Wunschabtastlänge zu Vorgabeabtastlänge angewandt wird, das bedeutet, statt des Verhältnisses von Wunschabtastlänge zu Vorgabeabtastlänge wird das Verhältnis von Wunschabtastlänge zu Vorgabeabtastlänge multipliziert mit dem Modulationsfaktor verwendet.

Nachdem die Modulationsfunktion f für die Integrationslänge als konstant angenommen wird, entspricht sie mithin einem Modulationsfaktor. In Formeln bedeutet dies, dass statt Gleichung (19) nun definiert wird, dass

$$x = \frac{d'}{d} f(|\nabla s(x)|) \qquad . \qquad (32)$$

In diesem Kontext der Gradienten-Opazitätsmodulation lässt sich auch eine weitere Verbesserung des Algorithmus der vorliegenden Erfindung ableiten. Es hat sich nämlich gezeigt, dass dann, wenn die Auslöschungsfunktion gemäß (31) moduliert wird, die modulierende Funktion (bzw. also der Modulationsfaktor) schnell gegen Null strebt, wenn relativ homogene Regionen mit niedriger Gradientenamplitude betrachtet werden. Damit nähert sich aber auch x gemäß (32) schnell der Null an, so dass Näherungen durchgeführt werden können, die in diesem Fall Berechnungen vereinfachen können, zumindest in Bereichen, in denen derart niedrige Werte für x vorliegen. In den sonstigen Bereichen werden die Volumenrenderintegrale selbstverständlich weiterhin wie oben beschrieben ausgewertet, nämlich durch Berechnung anhand der Formel (4) unter Verwendung der Formeln (7), (10) bzw. (21) für die Wunschabtastlänge d' unter Rückgriff auf die erste und wenigstens eine zweite Vorabintegrationstabelle.

Strebt x jedoch gegen Null, was beispielsweise während des der Auswertung der Volumenrenderintegrale (im "Compositing") vorgeschalteten "Shading" schon überprüft werden kann, können die auftretenden Potenzfunktionen approximiert werden. Da $T^x$ auch geschrieben werden kann als

$$exp(x * ln(T))$$

ergibt eine Taylor-Reihe von Exponentialfunktion exp()

$$T^x \approx 1 + x * ln(T) \qquad , \qquad (33)$$

wenn der Term x * ln(T) nahe an Null liegt. Diese Gleichung kann auf den meisten Hardwarekomponenten von Recheneinrichtungen schneller ausgewertet werden als eine allgemeine Potenzfunktion.

Eine andere mögliche Approximation für den Fall, dass x * ln(T) nahe an Null liegt, ist die unmittelbare Verwendung der einfacheren Farbkoeffizientenkorrektur aus [Schulze] gemäß Gleichung (9). Dies kann selbstverständlich dennoch mit der Vereinfachung der Exponentialfunktion kombiniert werden, so dass eine vereinfachte Variante von [Schulze]s Ansatz

$$C_i \frac{1-(1-\alpha_i)^x}{1-(1-\alpha_i)} \approx C_i \frac{-x*\ln(1-\alpha_i)}{\alpha_i} \qquad (34)$$

erreicht wird, die immer dann gilt, wenn x bzw. x * ln(T) nahe an Null liegt.

Wird also, insbesondere bereits während dem Shading, festgestellt, dass für bestimmte Bereiche des Anzeigedatensatzes, insbesondere bestimmte Strahlen, die Voraussetzung für die Näherungen (33) oder (34) erfüllt ist, können diese für diese Bereiche bzw. Strahlen eingesetzt werden. Allgemein kann also gesagt werden, dass bei einem einen Schwellwert unterschreitenden Wert für das mit dem Modulationsfaktor multiplizierte Verhältnis von Wunschabtastlänge zu Vorgabeabtastlänge während der Ermittlung eines dritten Farbkoeffizienten eine genäherte, weniger aufwendig zu berechnende Formel verwendet wird, wobei konkret vorgesehen sein kann, dass eine Potenzfunktion mit dem mit dem Modulationsfaktor multiplizierten Verhältnis von Wunschabtastlänge zu Vorgabeabtastlänge als Exponenten bis zum zweiten Term taylorentwickelt wird und/oder eine aus einem anderen, stärker vereinfachenden Ansatz resultierende Formel für den dritten Farbkoeffizienten verwendet wird. Durch Kombination beider Näherungsansätze ergibt sich, wie oben gezeigt wurde, die Formel (34).

Nochmals kurz zusammengefasst entspricht das erfindungsgemäße Verfahren also einem Algorithmus, der wenigstens zwei zweidimensionale Vorabintegrationstabellen als Eingangsdaten verwendet, deren Ermittlung ebenso bereits dargelegt wurde. Dann ist es mithin möglich, mit Hilfe der in den Vorabintegrationstabellen gespeicherten Opazitäten und Farbkoeffizienten unter Verwendung der Formeln (7) für die Opazitäten und (10) bzw. im Spezialfall (21) für die Farbkoeffizienten die einzelnen Beiträge für die Wunschabtastlänge bzw. Wunschabtastlängen, die sich im allgemeinen Fall von der Vorgabeabtastlänge unterscheidet bzw. unterscheiden, zu ermitteln, so dass die Beiträge zur Formel (4) bekannt sind und Volumenrenderintegrale mithin ermittelt werden können.

Ein besonders vorteilhafter Algorithmus entsteht dann, wenn neben der beschriebenen gedanklichen Unterteilung der Integrationslänge in Unterabschnitte die Unterteilungsparameter durch ein Optimierungsverfahren bestimmt werden. Dann liegt also die Kombination zweier Gedankengänge vor:

A) Es wird vorgeschlagen, die Integrationslänge für die Vorabintegration in wenigstens zwei Unterabschnitte zu unterteilen, die durch wenigstens einen Unterteilungsparameter $\lambda_j$ beschrieben werden. Werden die Farbkoeffizienten und die Opazitäten für diese Unterabschnitte bei einer Vorgabeabtastlänge d bestimmt, können die Vorabkoeffizienten für eine allgemeine Abtastlänge d' unter Verwendung der Gleichung (10) bzw. im Fall einer Unterteilung in zwei Unterabschnitte (21) berechnet werden. Ist die Farbfunktion eine stückweise konstante Funktion, mithin konstant innerhalb der Unterabschnitte, würde man sogar die mathematisch korrekten Werte der korrigierten Farbkoeffizienten für die Abtastlänge d' erhalten.

B) Die Unterteilungsparameter können theoretisch beliebig gewählt werden, was einen Freiheitsgrad zur Verfügung stellt. In der besonders bevorzugte Ausführungsform der vorliegenden Erfindung wird mithin vorgeschlagen, diese Freiheitsgrade zu nutzen, um ein Optimierungsproblem zu definieren und die speziellen Aufteilungsparameter zu verwenden, die in einem Optimierungsverfahren bestimmt wurden, welches das Optimierungsproblem löst. Die Lösung des Optimierungsproblems kann, wie dargelegt wurde, im bevorzugten Ausführungsbeispiel natürlich in die Berechnung der zweiten Vorabintegrationstabelle eingebettet werden.

Der A) und B) verbindende Absatz liefert Ergebnisse hervorragender Qualität bereits dann, wenn nur ein einziger Aufteilungsparameter, mithin eine einzige zweite Vorabintegrationstabelle, verwendet wird. Diese Kombination von A) und B) kann als "vorabintegrierte Optimierung" bezeichnet werden, da die Lösung eines Optimierungsproblems in den erzeugten Vorabintegrationstabellen kodiert ist.

Weitere Ansätze zur Verbesserung des grundlegenden Algorithmus, die oben detailliert diskutiert wurden, sind zunächst dadurch gegeben, dass ein Optimierungsverfahren vorgestellt wurde, um die optimalen Aufteilungsparameter auffinden zu können. Ferner wurde durch die Wahl von x=0,5 während der Vorabintegration eine äußerst einfache Metrik eingeführt, die lediglich die Berechnung von Quadratwurzeln anstatt allgemeiner Potenzfunktionen während des Optimierungsverfahrens fordert, so dass der Berechnungsaufwand seitens der Hardware reduziert werden kann. Zudem wurde eine Variante des Optimierungsverfahrens vorgestellt, Gleichung (26), die besonders effizient ist und nicht die Berechnung der Vorabintegrationstabelle für x=0,5 benötigt.

Es wurde ferner gezeigt, wie für den wichtigen RGB-Farbfall die Vorabintegrationstabellen trotz der vorgenommenen Optimierung problemlos als RGBA-Tabellen zur Verfügung gestellt werden können. Ferner wurde gezeigt, wie der Algorithmus effizient in Fällen der Gradienten-Opazitätsmodulation eingesetzt werden kann. Auch wurden Näherungen gezeigt, die bei der Gradienten-Opazitätsmodulation dann eingesetzt werden können, wenn x bzw. x * ln(T) nahe bei 0 liegt. Solche Situationen treten üblicherweise häufig bei der Gradienten-Opazitätsmodulation auf.

Durch den beschriebenen direkten Volumenrenderalgorithmus in seinen verschiedenen Ausgestaltungen können eine Vielzahl von Vorteilen gegenüber dem bekannten Stand der Technik erreicht werden.

Zunächst einmal erlaubt das erfindungsgemäße Verfahren eine äußerst hochqualitative Vorabintegration für allgemeine Abtastlängen, die lediglich wenigstens zwei zweidimensionale Vorabintegrationstabellen benötigt. Wollte man bislang eine derart hohe Bildqualität des Anzeigedatensatzes erzielen, wäre der Algorithmus von [Guthe] das Mittel der Wahl, welcher aber wenigstens drei Vorabintegrationstabellen als Eingangsdaten benötigt. Der Ansatz von [Guthe] für zwei Vorabintegrationstabellen erzeugt häufig Artefakte, so dass er nicht geeignet ist, in Fällen eingesetzt zu werden, in denen eine hohe Bildqualität gefordert wird. Die Variante des erfindungsgemäßen Verfahrens, bei der mithin lediglich zwei zweidimensionale Vorabintegrationstabellen erforderlich sind, ist mithin besonders vorteilhaft, nachdem eine einzige zweidimensionale Vorabintegrationstabelle nicht ausreichend ist, um den allgemeinen Fall mathematisch abzudecken, so dass ein Ansatz mit zwei zweidimensionalen Vorabintegrationstabellen das theoretisch (und nun auch praktisch) Beste ist, was diesbezüglich möglich ist.

Ein hauptsächlicher Vorteil der Möglichkeit, hochqualitative Anzeigebilder mit beliebigen Abtastlängen unter Verwendung von lediglich zwei Vorabintegrationstabellen statt drei Vorabintegrationstabellen zu ermitteln, ist, dass während des Volumenrenderns nur auf zwei Tabellen zugegriffen werden muss anstatt auf drei Tabellen. Diese Eigenschaft ist äußerst wichtig, da beim Volumenrendern eine äußerst große Menge von Vorabintegrationstabellenzugriffen notwendig sind, was bedeutet, dass das hier vorgestellte Verfahren es im Fall von zwei zweidimensionalen Vorabintegrationstabellen erlaubt, die Anzahl der erforderlichen Speicherzugriffe deutlich zu reduzieren. Dieser Vorteil wird in der Zukunft noch wichtiger werden, da die Rechenleistung von Prozessoren in einem deutlich höheren Grad ansteigt als die Performance von Speichereinrichtungen. Mithin sinken die Anforderungen an Speichereinrichtungen der durchführenden Recheneinrichtung deutlich, was die Speicherzugriffe angeht.

Ein weiterer Vorteil der Möglichkeit, lediglich zwei zweidimensionale Vorabintegrationstabellen statt drei zweidimensionalen Vorabintegrationstabellen zu verwenden, ist der reduzierte Speicherplatz in Speichereinrichtungen selbst. Selbst zweidimensionale Vorabintegrationstabellen können einen äußerst hohen Speicherbedarf bei 16 Bit-Quelldatensätzen zur Folge haben, so dass die Möglichkeit, auf eine solche Tabelle zu verzichten, eine äußerst vorteilhafte Eigenschaft zur Reduzierung der Speicheranforderungen ist.

In einigen homogenen Szenarien existiert für den Bediener aktuell die Wahl, ob eine Vorabintegration mit einer konstanten Vorgabeabtastlänge vorgenommen werden soll oder ob beliebige Wunschabtastlängen möglich sein sollen, obwohl auch in solchen Fällen beliebige Wunschabtastlängen mathematische Vorteile hätten. Die zusätzlichen Kosten im recheneinrichtungsseitigen Aufwand aktuell im Stand der Technik bekannter Ansätze mit allgemeiner Abtastlänge verhindern jedoch meist die Benutzung. Die Ausgestaltung der vorliegenden Erfindung, in der lediglich zwei zweidimensionale Vorabintegrationstabellen nötig sind, um allgemeine Wunschabtastlängen einsetzen zu können, sorgt dafür, dass die Verwendung angepasster Wunschabtastlängen attraktiver wird. Ein wichtiges Beispiel, das eingangs bereits erwähnt wurde, ist der Fall, in dem im Quelldatensatz trilinear interpoliert wird. Dann ist das resultierende Volumen innerhalb einer Gruppe von acht Voxeln, die trilinear interpoliert wurden, unendlich oft stetig differenzierbar, jedoch nicht an der Begrenzung dieser acht Voxeln, wo die stetige Differenzierbarkeit nicht gegeben ist. Die Möglichkeit, die Abtastpositionen immer auf einer solchen Begrenzung anzuordnen, kann äußerst zweckmäßig sein, wenn die interpolierten Anzeigeparameter entlang eines Strahls abgetastet werden sollen.

Um es zu ermöglichen, lediglich zwei zweidimensionale Vorabintegrationstabellen als Eingangsdaten zu verwenden, war es notwendig, die Lösung des Optimierungsproblems in der wenigstens einen zweiten Vorabintegrationstabelle zu integrieren. Eine wichtige Eigenschaft für einen praktisch einsetzbaren Vorabintegrationsalgorithmus ist, dass die Berechnung der erforderlichen Tabellen interaktiv durchgeführt werden kann, nachdem die Veränderung von Transferfunktionen in Echtzeit unterstützt werden soll. Diese Eigenschaft erfüllt der vorgeschlagene Algorithmus in der angegebenen Ausgestaltung deutlich. Das Optimierungsproblem kann auf natürliche Art und Weise mit der Berechnung der zweiten Vorabintegrationstabelle integriert werden, so dass die Berechnung der Vorabintegrationstabellen gemäß der vorliegenden Erfindung letztendlich, was die erforderliche Rechenleistung seitens der Recheneinrichtung betrifft, nur wenig "teurer" ist als die Berechnung zweier regulärer Vorabintegrationstabellen. Die auszuwertenden Werte zum Auffinden des Optimums im Optimierungsverfahren sind lediglich Partialsummen, die während der Berechnung regulärer Vorabintegrationstabellen ohnehin auftreten. Wird für diesen Fall x=0,5 gewählt, gilt zudem, dass die auftretenden Quadratwurzeloperationen durch moderne Hardware in der durchführenden Recheneinrichtung besonders schnell durchführbar sind.

Es sei an dieser Stelle nochmals hervorgehoben, dass der beschriebene Ansatz, auch im allgemeinen Fall, nicht auf die Verwendung von linearen Funktionen zur Approximation von s(z) beschränkt ist. Beispielsweise wurde in einem Artikel von J.-F. L. Hajjar et al., "Second Order Pre-Integrated Volume Rendering", Proc. IEEE Pacific Visualization Symp. (VIS 2008), Seiten 9-16 (im Folgenden [Hajjar]), vorgeschlagen, bei der Farbintegration in zweiter Ordnung zu arbeiten, wobei die Vorabintegrationstabelle nicht auf der Grundlage basiert, mit linearen Funktionen zu approximieren, sondern mit quadratischen Funktionen. Dies führt zu vierdimensionalen Vorabintegrationstabellen für eine allgemeine Abtastlänge. Der erfindungsgemäße Ansatz, der hier vorgestellt wurde, würde es nun erlauben, die vierdimensionalen Vorabintegrationstabellen in ein Problem abzubilden, das lediglich zwei dreidimensionale Vorabintegrationstabellen benötigt. Während zweidimensionale Vorabintegrationstabellen deutlich bevorzugt werden, gilt dennoch, dass auch die Nutzung von Vorabintegration zweiter Ordnung mit allgemeiner, beliebiger Abtastlänge attraktiver wird, wenn lediglich noch dreidimensionale Vorabintegrationstabellen benötigt werden.

Es mag also zwar bevorzugt sein, dass zur Ermittlung der Integrale der Vorabintegrationstabellen der Anzeigeparameter über die Vorgabeabtastlänge als eine lineare Funktion des Orts angenommen wird, dies ist jedoch nicht zwangsläufig erforderlich, wie gezeigt wurde.

Neben dem Verfahren betrifft die Erfindung auch eine Recheneinrichtung, die zur Durchführung des erfindungsgemäßen Verfahrens ausgebildet ist. Sämtliche Ausführungen bezüglich des erfindungsgemäßen Verfahrens lassen sich analog auf die erfindungsgemäße Recheneinrichtung übertragen, mit welcher mithin auch die genannten Vorteile erhalten werden können. Bei der Recheneinrichtung kann es sich um die Recheneinrichtung eines Bildauswertungsarbeitsplatzes oder gar einer Bildaufnahmeeinrichtung, beispielsweise einer CT-Einrichtung, handeln, welche beispielsweise an ein Bildarchivierungssystem, beispielsweise ein PACS, angeschlossen sein kann. Es ist jedoch auch denkbar, dass die Recheneinrichtung ein Rendering-Server ist, auf dem parallel mehrere Rendervorgänge realisierbar sind. Das erfindungsgemäße Verfahren erlaubt es insbesondere im Fall von genau einer zweiten Vorabintegrationstabelle, die Anforderungen an die Rechenleistung, die Zahl der Speicherzugriffe und den Speicherplatz deutlich zu reduzieren und liefert dennoch hochqualitative Anzeigedatensätze.

Schließlich betrifft die Erfindung auch ein Computerprogramm, das die Schritte des erfindungsgemäßen Verfahrens durchführt, wenn es auf einer Recheneinrichtung, insbesondere der erfindungsgemäßen Recheneinrichtung, ausgeführt wird. Auch auf das Computerprogramm lassen sich sämtliche Ausführungen bezüglich des Verfahrens und der Recheneinrichtung übertragen. Es sei jedoch an dieser Stelle hervorgehoben, dass es heutige Technologien auch vorteilhaft erlauben, das erfindungsgemäße Verfahren größtenteils oder gar vollständig als Hardware zu realisieren. Ein Computerprogramm bzw. Softwareanteil zur Realisierung des erfindungsgemäßen Verfahrens können auf einem nichttransienten Datenträger, beispielsweise einer CD-ROM, abgespeichert sein.

Es sei an dieser Stelle noch angemerkt, dass die Vorgabeabtastlänge letztlich beliebig gewählt werden kann, es jedoch bevorzugt ist, diese beispielsweise als kleinste Kantenlänge oder auch als mittlere Kantenlänge eines Voxels in Frage kommender Quelldatensätze zu wählen.

Weitere Vorteile und Einzelheiten der vorliegenden Erfindung ergeben sich aus den im Folgenden beschriebenen Ausführungsbeispielen sowie anhand der Zeichnung. Dabei zeigen:

Fig. 1 einen erläuternden Ablaufplan zur Nutzung des erfindungsgemäßen Verfahrens beim Volumenrendern,

Fig. 2 einen Ablaufplan zur Ermittlung von Vorabintegrationstabellen und

Fig. 3 eine erfindungsgemäße Recheneinrichtung.

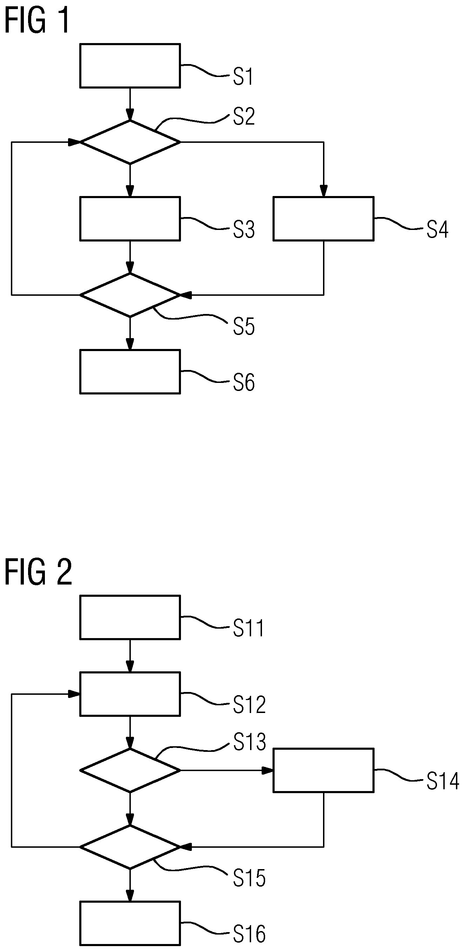

Fig. 1 zeigt den Einsatz des erfindungsgemäßen Verfahrens beim direkten Volumenrendern eines Quelldatensatzes, der in jedem Voxel einen skalaren Wert eines Anzeigeparameters s enthält. Dabei wird nun zunächst davon ausgegangen, dass zwei zweidimensionale Vorabintegrationstabellen bereits in einer Speichereinrichtung, die das Verfahren nach Fig. 2 durchführt, vorliegen. Diese Vorabintegrationstabellen wurden für eine Vorgabeabtastlänge d ermittelt, die vorliegend als kleinste Kantenlänge eines Voxels möglicher Quelldatensätze bestimmt wurde. Eine Vorabintegrationstabelle, nämlich die erste Vorabintegrationstabelle, enthält für verschiedene Start- und Endwerte $s_f$ und $s_b$ des Anzeigeparameters Opazitäten $\alpha$ und Farbkoeffizienten C für die gesamte Integrallänge [0,1], welche durch Variablentransformation aus der Vorgabetastlänge hervorging. Die zweite Vorabintegrationstabelle enthält ebenso Opazitäten $\alpha$ und Farbkoeffizienten C, in diesem Fall allerdings für einen Unterabschnitt [0, $\lambda_{opt}$]. Dabei wurde ersichtlich die Integrationslänge vorliegend in zwei Unterabschnitte aufgeteilt.

Der Schritt S1 bezeichnet nun zusammenfassend übliche beim direkten Volumenrendern vorliegende Schritte, die vorliegend nicht genauer erläutert werden sollen, da es beim erfindungsgemäßen Verfahren um die Auswertung des Volumenrenderintegrals für verschiedene Strahlen geht ("Compositing"). Im Schritt S1 sind mithin in letztlich beliebiger Reihenfolge die Schritte der Klassifizierung, Interpolation und des Shading enthalten, genauso die Definition der Strahlen, sei es explizit oder implizit, für die das Volumenrenderintegral (1) approximativ gelöst werden soll. Dabei wird vorliegend im Übrigen von einem RGB-Schema für die Farbfunktionen ausgegangen, so dass die Vorabintegrationstabellen im RGBA-Format vorliegen.

Für die einzelnen zu betrachtenden Strahlen, um den Anzeigedatensatz zu ermitteln, können beliebige Wunschabtastlängen gewählt werden, beispielsweise so, dass bei trilinearer Interpolation die Abtastpositionen immer auf Rändern von Interpolationsgruppen der Voxel zu liegen kommen. Aufgabe der approximierten Berechnung des Volumenrenderintegrals, wofür im Übrigen die Formel (4) eingesetzt wird, ist es mithin unter anderem, die aus den Vorabintegrationstabellen entnehmbaren Werte von der Vorgabeabtastlänge auf die Wunschabtastlänge umzurechnen.

Dabei kann die Umrechnung in diesem Ausführungsbeispiel auf zwei verschiedene Arten erfolgen, wobei in einem Schritt S2, der bevorzugt während des Shading durchgeführt wird und ein entsprechendes Flag für die Berechnung setzt, entschieden wird, welche Variante eingesetzt wird.

Dabei sind der Schritt S2 und die zugehörige Berechnungsvariante im Schritt S4 allerdings optional, nachdem sie nur zweckmäßig eingesetzt werden können, wenn eine Gradienten-Opazitätsmodulation eingesetzt wird, die von einem Bediener beispielsweise in einer Benutzeroberfläche der Recheneinrichtung, die das Verfahren durchführt, oder einer die Berechnung von der das Verfahren durchführenden Recheneinrichtung anfordernden Recheneinrichtung angewählt werden kann.

Liegt eine Gradienten-Opazitätsmodulation vor, wird überprüft, ob die Größe $x * \ln(T)$ kleiner als ein Schwellwert ist, mithin nahe genug an 0 liegt, dass eine genäherte Formel, nämlich die Formel (34), eingesetzt werden kann, um die Farbkoeffizienten für die Wunschabtastlänge zu bestimmen. x definiert sich in diesem Fall gemäß Gleichung (32).

Zunächst soll allerdings der Normalfall diskutiert werden, in dem keine Näherung vorgenommen wird bzw. möglich ist, und der grundsätzlich immer realisiert wird, wenn keine Gradienten-Opazitätsmodulation durchgeführt wird. Dann werden in einem Schritt S3 Opazitäten und Farbkoeffizienten für die Wunschabtastlänge eines Teilintegrals des Volumenrenderintegrals für alle diese Teilintegrale entlang eines Strahls ermittelt. Hierzu werden zunächst aus der ersten Vorabintegrationstabelle und aus der zweiten Vorabintegrationstabelle für die Start- und Endwerte $s_f$ und $s_b$ des gerade betrachteten Teilintervalls eine erste Opazität $\alpha(0,1)$, eine zweite Opazität $\alpha(0,\lambda_{opt})$, erste Farbkoeffizienten $C(0, 1)$ und zweite Farbkoeffizienten $C(0, \lambda_{opt})$ ausgelesen. Mit Hilfe der Formeln (7) und (21) ist es nun möglich, die entsprechenden Beiträge für das Teilintegral, also die entsprechenden Opazitäten $\alpha'(0,1)$ und $C'(0,1)$ für die Wunschabtastlänge des gerade betrachteten Teilintervalls zu berechnen. Liegen diese Beiträge für alle Teilintegrale vor, kann gemäß der Formel (4) das Volumenrenderintegral für den Strahl ermittelt werden.

Wird Gradienten-Opazitätsmodulation verwendet und ist eine Näherung möglich, ergibt sich die einzige Änderung im Schritt S4 dadurch, dass statt der Formel (21) die Formal (33) verwendet wird.

In einem Schritt S5 wird dann überprüft, ob alle Volumenrenderintegrale berechnet wurden, wobei, wenn dies nicht der Fall ist, wieder mit Schritt S2 für den nächsten Strahl fortgefahren wird. Sind alle Volumenrenderintegrale ausgewertet, wird aus diesen im Schritt S6 der zweidimensionale Anzeigedaten gebildet und kann beispielsweise dargestellt werden bzw. der anfragenden Recheneinrichtung zur Anzeige zur Verfügung gestellt werden.

So kann, trotzdem beliebige Wunschabtastlängen gewählt werden können, in Echtzeit eine Ermittlung von Anzeigedatensätzen erfolgen.

Es sei im Übrigen darauf hingewiesen, dass es durchaus im Rahmen der Möglichkeiten der Erfindung liegt, auch die Transferfunktionen interaktiv zu verändern, beispielsweise über eine entsprechende Benutzeroberfläche der Recheneinrichtung, die das Verfahren durchführt, oder die die Berechnung von der Recheneinrichtung, die das Verfahren durchführt, anfordert. Dann werden die Vorabintegrationstabellen auf äußerst schnelle Weise neu berechnet, nachdem die Vorabintegrationstabellen selbstverständlich von der Wahl der Transferfunktion, konkret also der Auslöschungsfunktion und der Farbfunktion, abhängen. Fig. 2 erläutert nun genauer, wie die Vorabintegrationstabellen im Rahmen der vorliegenden Erfindung optimal errechnet werden.

Dabei wird zunächst in einem Schritt S11 die erste Vorabintegrationstabelle für die Vorgabeabtastlänge d bestimmt, was wie im Stand der Technik grundsätzlich bekannt geschehen kann. Dabei wird ein spezieller Algorithmus verwendet, der über ständig wachsende, weitere Anteile des Integrals hinzunehmende Partialsummen sich dem zu berechnenden jeweiligen Integral annähert (nachdem vorliegend die übliche lineare Näherung für die Abhängigkeit des Anzeigeparameters s vom Ort z gewählt wird, ergeben sich die zu berechnenden Integrale durch die Formeln (5) und (6)).

Soll nun auch die zweite Vorabintegrationstabelle bestimmt werden, wird ein demgegenüber nur leicht modifizierter Algorithmus eingesetzt, der es erlaubt, während der Integration ein Optimierungsverfahren durchzuführen, das für jedes Wertepaar $s_f$ und $s_b$ einen optimalen Unterteilungsparameter $\lambda_{opt}$ bestimmt. Dies bedeutet insbesondere auch, dass für jeden Eintrag der Vorabintegrationstabelle der optimale Wert des Unterteilungsparameters unterschiedlich sein kann; der Unterteilungsparameter wird jedoch nicht explizit gespeichert, sondern allenfalls implizit über den entsprechenden Integralwert.

Liegen also im Schritt S12 bei der Partialsummenbildung die Integrale für die Opazität und die im RGB-Fall drei Farbkoeffizienten von 0 bis zu einem zu untersuchenden Wert des Unterteilungsparameters vor, kann unter Zugriff auf Werte aus der bereits berechneten ersten Vorabintegrationstabelle die durch die Formeln (27) und (26) definierte Zielfunktion für diesen Zwischenwert des Unterteilungsparameters bestimmt werden.

In einem Schritt S13 wird nun überprüft, ob dieser Wert der Zielfunktion den zuletzt gespeicherten, vorherigen Maximalwert der Zielfunktion übersteigt. Ist dies der Fall, werden die bis dahin ermittelten Werte für die Integrale und der neue Maximalwert abgespeichert, Schritt S14. Ist der Wert der Zielfunktion jedoch kleiner als der bislang gespeicherte Maximalwert, wird unmittelbar mit Schritt S15 fortgefahren, indem überprüft wird, ob die Integrallänge bereits vollständig durchschritten wurde. Ist dies nicht der Fall, werden die nächsten Partialsummen im Schritt S12 bestimmt.

Ist die modifizierte Form des Vorabintegrationsalgorithmus, die durch die Schritte S12 bis S15 beschrieben ist, vollständig, das bedeutet, ist die gesamte Integrallänge durchlaufen, wird im Schritt S16 die zweite Vorabintegrationstabelle durch Verwendung der zuletzt gespeicherten Werte für die Integrale gebildet, so dass letztlich immer die dem Maximum zugehörigen Werte für die Integrale ausgewählt werden und die zweite Vorabintegrationstabelle bilden.

Es sei an dieser Stelle noch angemerkt, dass für die Zwecke der Ermittlung der Vorabintegrationstabellen x=0,5 gewählt wurde, da dann die Potenzfunktionen als Quadratwurzeln besonders einfach auf der Hardware der verwendeten Recheneinrichtung ausgeführt werden können.

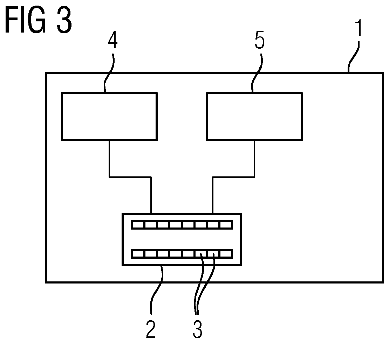

Fig. 3 zeigt schließlich eine Prinzipskizze einer erfindungsgemäßen Recheneinrichtung, auf der das erfindungsgemäße Verfahren, realisiert durch das erfindungsgemäße Computerprogramm, ausgeführt werden kann. Die dort dargestellte Recheneinrichtung 1 ist als ein Rendering-Server ausgebildet, das bedeutet, verschiedenste Benutzer können, insbesondere über ein Netzwerk, auf den Rendering-Server zugreifen, um diverse dreidimensionale Quelldatensätze rendern zu lassen und zweidimensionale Anzeigedatensätze zu erhalten.

Die Recheneinrichtung 1 weist eine Recheneinheit 2 mit einer Vielzahl von Prozessoren 3 auf, die jeweils wieder mehrere Prozessorkerne aufweisen können. Damit sind hochgradig parallelisierte Berechnungsvorgänge möglich. Die Recheneinheit 2 greift auf eine Speichereinrichtung 4 zu, in der die Vorabintegrationstabellen abgelegt sind. Dabei ist aufgrund der im hier dargestellten Ausführungsbeispiel nur zwei erforderlichen zweidimensionalen Vorabintegrationstabellen ein geringerer Speicherplatz in der Speichereinrichtung 4 erforderlich und die Zahl der Zugriffe auf die Speichereinrichtung 4 wird ebenso in Grenzen gehalten. Zum Speichern des erfindungsgemäßen Computerprogramms ist zweckmäßigerweise eine weitere Speichereinrichtung 5 vorgesehen.

Selbstverständlich weist die Recheneinrichtung 1 noch weitere, grundsätzlich bekannte Komponenten auf, insbesondere Schnittstellen bzw. Anschlüsse, über die eine Verbindung zu dem Netzwerk aufgebaut werden kann, und dergleichen.

Es sei an dieser Stelle noch darauf hingewiesen, dass es auch denkbar ist, Teile des erfindungsgemäßen Verfahrens durch Hardware-Komponenten zu realisieren, insbesondere auch das gesamte erfindungsgemäße Verfahren, was weitere Vorteile mit sich bringen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Erzeugung eines Anzeigedatensatzes zur Darstellung eines dreidimensionalen Quelldatensatzes wenigstens eines Anzeigeparameters durch Volumenrendern, wobei ein Volumenrenderintegral mit einem eine Auslöschungsfunktion, die einem Wert des Anzeigeparameters einen Auslöschungswert pro Länge zuordnet, und eine Farbfunktion, die einem Wert des Anzeigeparameters wenigstens einen Farbwert pro Strecke zuordnet, aufweisenden Integranden zur Ermittlung der Anzeigedaten ausgewertet wird, und wobei das Volumenrenderintegral in Beiträge aus dritten Opazitäten als von der Auslöschungsfunktion abhängige Integrale und dritten Farbkoeffizienten als von der Farbfunktion und der Auslöschungsfunktion abhängige Integrale, die jeweils durch einen Startwert und einen Endwert des Anzeigeparameters sowie eine das Intervall, über das integriert wird, beschreibende Wunschabtastlänge beschrieben sind, zerlegt wird,
**dadurch gekennzeichnet,**
**dass** zur Auswertung des Volumenrenderintegrals folgende Schritte durchgeführt werden:

- basierend auf einer Unterteilung der bezüglich einer festen, von der Wunschabtastlänge unabhängigen, vorgegebenen Vorgabeabtastlänge gegebenen Integrationslänge in wenigstens zwei Unterabschnitte, die durch wenigstens einen Unterteilungsparameter beschrieben werden, Bereitstellen einer Zahl, die der Anzahl der Unterabschnitte entspricht, von Vorabintegrationstabellen, von denen sich wenigstens die Zahl minus Eins auf Integrationen über unterschiedliche Unterabschnitte beziehen, in denen jeweils einem Startwert und einem Endwert des Anzeigeparameters eine zur Berechnung eines Beitrags des Volumenrenderintegrals zu verwendende Vorgabeabtastlängen-Opazität und wenigstens ein Vorgabeabtastlängen-Farbkoeffizient zugeordnet sind,
- für jeden Beitrag des Volumenrenderintegrals Ermittlung der Vorgabeabtastlängen-Opazitäten und der Vorgabeabtastlängen-Farbkoeffizienten aus den Vorabintegrationstabellen und Berechnen der dritten, auf die Wunschabtastlänge umgerechneten Opazitäten aus den jeweiligen Vorgabeabtastlängen-Opazitäten sowie dem Verhältnis aus Wunschabtastlänge und Vorgabeabtastlänge und der dritten Farbkoeffizienten aus den Vorgabeabtastlängen-Opazitäten, den Vorgabeabtastlängen-Farbkoeffizienten sowie dem Verhältnis aus Wunschabtastlänge und Vorgabeabtastlänge, und

- Ermitteln des Volumenrenderintegrals aus den Beiträgen,

wobei die dritten Opazitäten nach der Formel

$$1 - \alpha'(0,1) = (1 - \alpha(0,1))^{d'/d}$$

und die dritten Farbkoeffizienten nach der Formel

$$C'(0,1) = \sum_{i=0}^{n} C(\lambda_i, \lambda_{i+1}) \frac{1 - T(\lambda_i, \lambda_{i+1})^x}{1 - T(\lambda_i, \lambda_{i+1})} \prod_{j=0}^{i-1} T(\lambda_j, \lambda_{j+1})^x$$

berechnet werden, wobei

$\alpha'(0,1)$ die dritte Opazität über die gesamte Integrationslänge von 0 bis 1,
$\alpha(0,1)$ die ggf. auch als Vorgabeabtastlängen-Opazität vorhandene Opazität für die gesamte Integrationslänge von 0 bis 1 für die Vorgabeabtastlänge,
$C'(0,1)$ den dritten Farbkoeffizienten über die gesamte Integrationslänge von 0 bis 1,
$\lambda_i$ als Unterteilungsparameter geordnete Zahlen, die $0 \le \lambda_2 \le ... \le \lambda_n \le 1$ erfüllen, mit der Konvention, dass $\lambda_0 = 0$ und $\lambda_{n+1} = 1$ ist,
$C(\lambda_i, \lambda_{i+1})$ den Vorgabeabtastlängen-Farbkoeffizienten für den Unterabschnitt zwischen $\lambda_i$ und $\lambda_{i+1}$,
$T(\lambda_i, \lambda_{i+1}) = 1 - \alpha(\lambda_i, \lambda_{i+1})$ die Vorgabeabtastlängen-Transparenz für den Unterabschnitt zwischen $\lambda_i$ und $\lambda_{i+1}$, mit $\alpha(\lambda_i, \lambda_{i+1})$ den entsprechenden Vorgabeabtastlängen-Opazitäten, und
$x = \dfrac{d'}{d}$ das Verhältnis der Wunschabtastlänge d' zur Vorgabeabtastlänge d bezeichnen,

wobei die Vorgabeabtastlängen-Farbkoeffiz. $C(\lambda_i, \lambda_{i+1})$ und die Vorgabeabtastlängen-Opazitäten $\alpha(\lambda_i, \lambda_{i+1})$ für den Unterabschnitt zwischen $\lambda_i$ und $\lambda_{i+1}$ beschrieben werden können als

$$C(\lambda_1, \lambda_2) = \int_{\lambda_1}^{\lambda_2} \tau\left((1-\omega)s_f + \omega s_b\right) c\left((1-\omega)s_f + \omega s_b\right) \exp\left(-\int_{\lambda_1}^{\omega} \tau\left((1-t)s_f + t\, s_b\right) d \; dt\right) d \; d\omega$$

bzw.

$$\alpha(\lambda_1, \lambda_2) = 1 - \exp\left(-\int_{\lambda_1}^{\lambda_2} \tau\left((1-\omega)s_f + \omega s_b\right) d \; d\omega\right)$$

worin $s_f$ und $s_b$ Randwerte des für den Integrationsbereich linear angenommenen Anzeigeparameters s sind und $\tau$ die Auslöschungsdichte sowie c die Farbfunktion im Volumenrenderintegral sind.

2. Verfahren nach Anspruch 1, **dadurch gekennzeichnet, dass** als Vorabintegrationstabellen eine erste Vorabintegrationstabelle mit ersten Opazitäten und ersten Farbkoeffizienten ermittelt wird, deren Integrale über die gesamte Integrationslänge ausgewertet wurden, und die Zahl minus Eins an zweiten Vorabintegrationstabellen mit zweiten Opazitäten und zweiten Farbkoeffizienten ermittelt wird, deren Integrale jeweils für einen der ersten Zahl minus Eins Unterabschnitte ausgewertet wurden, wobei sich die dritten Opazitäten aus den ersten Opazitäten sowie dem Verhältnis aus Wunschabtastlänge und Vorgabeabtastlänge und die dritten Farbkoeffizienten den ersten und zweiten Opazitäten, den ersten und zweiten Farbkoeffizienten sowie dem Verhältnis aus Wunschabtastlänge und Vorgabeabtastlänge ergeben.

3.  Verfahren nach Anspruch 2, **dadurch gekennzeichnet, dass** die Integrationslänge in genau zwei Unterabschnitte zerlegt wird, wobei sich die genau eine zweite Vorabintegrationstabelle auf den ersten Unterabschnitt bezieht und sich die dritten Farbkoeffizienten nach der Formel

$$C'(0,1) \approx C\left(0, \lambda_1\right) \frac{1 - T(0, \lambda_1)^x}{1 - T(0, \lambda_1)} + \left(C(0,1) - C\left(0, \lambda_1\right)\right) \frac{T(0, \lambda_1)^x - T(0,1)^x}{T(0, \lambda_1) - T(0,1)}$$

berechnen.

4.  Verfahren nach einem der vorangehenden Ansprüche, **dadurch gekennzeichnet, dass** der wenigstens eine Unterteilungsparameter in einem auf die Minimierung des Abstands zwischen durch Integration ermittelten dritten Farbkoeffizienten und aus Vorgabeabtastlängen-Opazitäten und Vorgabeabtastlängen-Farbkoeffizienten bestimmten dritten Farbkoeffizienten abzielenden Optimierungsverfahren ermittelt wird.

5.  Verfahren nach Anspruch 4, **dadurch gekennzeichnet, dass** das Verhältnis zwischen Wunschabtastlänge und Vorgabeabtastlänge für das Optimierungsverfahren fest, insbesondere als 0,5, vorgegeben wird.

6.  Verfahren nach Anspruch 4 oder 5, **dadurch gekennzeichnet, dass** im Rahmen des Optimierungsverfahrens eine durch Verschiebung positive, unter Weglassen der von dem Unterteilungsparameter unabhängigen, durch Integration ermittelten dritten Farbkoeffizienten definierte Zielfunktion maximiert wird.

7.  Verfahren nach einem der Ansprüche 4 bis 6 unter Rückbezug auf Anspruch 3, **dadurch gekennzeichnet, dass** vor der Durchführung des Optimierungsverfahrens die erste Vorabintegrationstabelle ermittelt wird, woraufhin unter Nutzung von Integralen der ersten Vorabintegrationstabelle das Optimierungsverfahren während der numerischen Integration zur Ermittlung der wenigstens einen zweiten Vorabintegrationstabelle durchgeführt wird, wobei nach jedem Teilschritt der numerischen Integration überprüft wird, ob für die bis dorthin gebildeten Integrale ein neues Extremum der Zielfunktion aufgefunden wurde und bei Vorliegen eines neuen Extremums diese Integral abgespeichert werden.

8.  Verfahren nach einem der Ansprüche 4 bis 7, **dadurch gekennzeichnet, dass** bei der Verwendung von mehreren Farben mit zugeordneten Farbfunktionen das Optimierungsverfahren für alle Farben gleichzeitig unter Verwendung einer Zielfunktion, die sich als Summe der Zielfunktionen der einzelnen Farben ergibt, durchgeführt wird.

9.  Verfahren nach einem der vorangehenden Ansprüche, **dadurch gekennzeichnet, dass** eine abhängig vom Betrag des dreidimensionalen Gradienten des Anzeigeparameters modulierte Auslöschungsfunktion für das Volumenrenderintegral verwendet wird, wobei bei dessen Auswertung zur Berücksichtigung der Modulation der Modulationsfaktor auf das Verhältnis von Wunschabtastlänge zu Vorgabeabtastlänge angewandt wird.

10. Verfahren nach Anspruch 9, **dadurch gekennzeichnet, dass** bei einem einen Schwellwert unterschreitenden Wert für das mit dem Modulationsfaktor multiplizierte Verhältnis von Wunschabtastlänge zu Vorgabeabtastlänge während der Ermittlung eines dritten Farbkoeffizienten eine genäherte, weniger aufwendig zu berechnende Formel verwendet wird.

11. Verfahren nach Anspruch 10, **dadurch gekennzeichnet, dass** eine Potenzfunktion mit dem mit dem Modulationsfaktor multiplizierten Verhältnis von Wunschabtastlänge zu Vorgabeabtastlänge als Exponenten bis zum zweiten Term taylorentwickelt wird und/oder eine aus einem anderen, stärker vereinfachenden Ansatz resultierende Formel für den dritten Farbkoeffizienten verwendet wird.

12. Verfahren nach einem der vorangehenden Ansprüche, **dadurch gekennzeichnet, dass** zur Ermittlung der Integrale der Vorabintegrationstabellen der Anzeigeparameter über die Vorgabeabtastlänge als eine lineare Funktion des Orts angenommen wird.

13. Recheneinrichtung (1), ausgebildet zur Durchführung eines Verfahrens nach einem der vorangehenden Ansprüche.

**14.** Computerprogramm, das die Schritte eines Verfahrens nach einem der Ansprüche 1 bis 12 durchführt, wenn es auf einer Recheneinrichtung (1) ausgeführt wird.

**Claims**

**1.** Method for generating a display data set for depicting a three-dimensional source data set of at least one display parameter through volume rendering, wherein a volume-rendering integral with an integrand with an extinction function, which assigns one extinction value for each distance to a value of the display parameter, and a colour function, which assigns at least one chromaticity for each path to a value of the display parameter, is evaluated to determine the display data and wherein the volume-rendering integral is broken down into contributions from third opacities as integrals dependent upon the extinction function and third colour coefficients as integrals dependent upon the colour function and the extinction function, which are each described by a front value and a back value of the display parameter and a desired sampling distance describing the interval used for integration,

**characterised in that**
the following steps are performed for the evaluation of the volume-rendering integral:

- on the basis of a subdivision of the integration distance specified with respect to a fixed prespecified target sampling distance which is independent of the desired sampling distance into at least two subsections described by at least one subdivision parameter, provision of a number, which corresponds to the number of subsections, of pre-integration tables of which at least the number minus one relate to integrations over different subsections in which in each case a front value and a back value of the display parameter are assigned a target sampling distance opacity to be used to calculate a contribution of the volume-rendering integral and at least one target sampling distance colour coefficient,
- for each contribution of the volume-rendering integral, determination of the target sampling distance opacities and the target sampling distance colour coefficients from the pre-integration tables and calculation of the third opacities converted to the desired sampling distance from the respective target sampling distance opacities and the ratio of desired sampling distance and target sampling distance and the third colour coefficients from the target sampling distance opacities, the target sampling distance colour coefficients and the ratio of desired sampling distance and target sampling distance and
- determination of the volume-rendering integral from the contributions,

wherein the third opacities are calculated according to the formula

$$1 - \alpha'(0,1) = (1 - \alpha(0,1))^{d'/d}$$

and the third colour coefficients are calculated according to the formula

$$C'(0,1) = \sum_{i=0}^{n} C(\lambda_i, \lambda_{i+1}) \frac{1 - T(\lambda_i, \lambda_{i+1})^x}{1 - T(\lambda_i, \lambda_{i+1})} \prod_{j=0}^{i-1} T(\lambda_j, \lambda_{j+1})^x ,$$

wherein

$\alpha'(0,1)$ designates the third opacity over the entire integration distance of 0 to 1,
$\alpha(0,1)$ designates the opacity also optionally available as the target sampling distance opacity for the entire integration distance of 0 to 1 for the target sampling distance,
$C'(0,1)$ designates the third colour coefficients over the entire integration distance of 0 to 1,
$\lambda_i$ designates numbers ordered as subdivision parameters satisfying $0 \le \lambda_1 \le \lambda_2 \le ... \le \lambda_n \le 1$ with the convention that $\lambda_0 = 0$ and $\lambda_{n+1} = 1$,
$C(\lambda_i, \lambda_{i+1})$ designates the target sampling distance colour coefficients for the subsection between $\lambda_i$ and $\lambda_{i+1}$,
$T(\lambda_i, \lambda_{i+1}) = 1 - \alpha(\lambda_i, \lambda_{i+1})$ designates the target sampling distance transparency for the subsection between $\lambda_i$ and $\lambda_{i+1}$, where $\alpha(\lambda_i, \lambda_{i+1})$ is the corresponding target sampling distance opacities, and

$x = \dfrac{d'}{d}$ designates the ratio of the desired sampling distance d' to the target sampling distance d,

wherein the target sampling distance colour coefficients $C(\lambda_i, \lambda_{i+1})$ and the target sampling distance opacities $\alpha(\lambda_i, \lambda_{i+1})$ can be described for the subsection between $\lambda_i$ and $\lambda_{i+1}$ as

$$C(\lambda_1, \lambda_2) = \int_{\lambda_1}^{\lambda_2} \tau\left((1-\omega)s_f + \omega s_b\right) c\left((1-\omega)s_f\right.$$
$$\left. + \omega s_b\right) \exp\left(-\int_{\lambda_1}^{\omega} \tau\left((1-t)s_f + ts_b\right) d\, dt\right) d\, d\omega$$

or

$$\alpha(\lambda_1, \lambda_2) = 1 - \exp\left(-\int_{\lambda_1}^{\lambda_2} \tau\left((1-\omega)s_f + \omega s_b\right) d\, d\omega\right)$$

wherein $s_f$ and $s_b$ are limit values of the display parameter s assumed for the integration range and $\tau$ is the extinction density and c is the colour function in the volume rendering integral.

2. Method according to claim 1, **characterised in that**, as the pre-integration tables, a first pre-integration table with first opacities and first colour coefficients is determined, the integrals of which were evaluated over the entire integration distance and the number minus one is determined on second pre-integration tables with second opacities and second colour coefficients the integrals of which were each evaluated for one of the first number minus one subsections, wherein the third opacities are obtained from the first opacities and the ratio of desired sampling distance and target sampling distance and the third colour coefficients from the first and second opacities, the first and second colour coefficients and the ratio of desired sampling distance and target sampling distance.

3. Method according to claim 2, **characterised in that** the integration distance is broken down into precisely two subsections, wherein the precisely one second pre-integration table relates to the first subsection and the third colour coefficients are calculated according to the formula

$$C'(0,1) \approx C(0,\lambda_1) \frac{1 - T(0,\lambda_1)^x}{1 - T(0,\lambda_1)} + (C(0,1) - C(0,\lambda_1)) \frac{T(0,\lambda_1)^x - T(0,1)^x}{T(0,\lambda_1) - T(0,1)} \, .$$

4. Method according to one of the preceding claims, **characterised in that** the at least one subdivision parameter is determined in an optimisation method targeted at the minimisation of the interval between third colour coefficients determined by integration and third colour coefficients determined from target sampling distance opacities and target sampling distance colour coefficients.

5. Method according to claim 4, **characterised in that** the ratio between desired sampling distance and target sampling distance for the optimisation method is fixed in advance, in particular as 0.5.

6. Method according to claim 4 or 5, **characterised in that**, within the context of the optimisation methods, a defined target function, which is positive due to displacement, is maximised with the omission of the third colour coefficients independent of the subdivision parameters determined by integration.

7. Method according to one of claims 4 to 6 referring back to claim 3, **characterised in that**, prior to the determination of the optimisation methods, the first pre-integration table is determined, upon which, using integrals from the first pre-integration table, the optimisation method is performed during the numerical integration for the determination of the at least one second pre-integration table, wherein, after each part-step of the numerical integration, a check is performed as to whether a new extreme value of the target function for the integrals formed thitherto has been found and, if there is a new extreme value, these integrals are stored.

8. Method according to one of claims 4 to 7, **characterised in that**, when several colours with assigned colour functions are used, the optimisation method is performed for all colours simultaneously using a target function performed as the sum of the target functions of the individual colours.

9. Method according to one of the preceding claims, **characterised in that** a modulated extinction function dependent upon the amount of the three-dimensional gradient of the display parameter is used for the volume-rendering integral, wherein during the evaluation of which, to take account of the modulation, the modulation factor is applied to the ratio of desired sampling distance to target sampling distance.

10. Method according to claim 9, **characterised in that**, in the case of a value that falls below the threshold value for the ratio of desired sampling distance to target sampling distance multiplied with the modulation factor, during the determination of a third colour coefficient, an approximated, less-complicated-to-determine formula is used.

11. Method according to claim 10, **characterised in that** a power function with the ratio of desired sampling distance to target sampling distance multiplied with the modulation factor is Taylor-expanded as an exponent up to the second term and/or a formula resulting from another, more greatly simplifying approach is used for the third colour coefficients.

12. Method according to one of the preceding claims, **characterised in that** for the determination of the integrals of the pre-integration tables, the display parameter over the target sampling distance is assumed to be a linear function of the location.

13. Computing mechanism (1), embodied to perform a method according to one of the preceding claims.

14. Computer program that performs the steps of a method according to one of claims 1 to 12 when executed on a computing mechanism (1).

## Revendications

1. Procédé de production d'un jeu de données d'affichage pour représenter un jeu de données source tridimensionnel d'au moins un paramètre d'affichage avec rendu de volume, dans lequel on exploite, pour la détermination des données d'affichage, une intégrale de rendu de volume ayant une fonction d'extinction, qui associe, par longueur, une valeur d'extinction à une valeur du paramètre d'affichage, et une fonction de couleur, qui associe, par section, au moins une valeur de couleur à une valeur du paramètre d'affichage, et dans lequel on décompose l'intégrale de rendu de volume en contributions composées de troisièmes opacités comme intégrales dépendant de la fonction d'extinction et de troisièmes coefficients de couleur comme intégrale dépendant de la fonction de couleur et de la fonction d'extinction, qui sont décrites chacune par une valeur initiale et une valeur finale du paramètre d'affichage, ainsi que par une longueur d'étalonnage souhaitée décrivant l'intervalle sur lequel on intègre,
**caractérisé**
**en ce que**, pour exploiter l'intégrale de rendu de volume, on effectue les stades suivants :

- sur la base d'une subdivision de la longueur d'intégration donnée, par rapport à une longueur d'étalonnage prescrite fixe, donnée à l'avance, indépendante de la longueur d'étalonnage souhaitée, en au moins deux sous-parties, qui sont décrites par au moins un paramètre de subdivision, mise à disposition d'un nombre, qui correspond au nombre des sous-parties de table d'intégration à l'avance, dont au moins le nombre moins un se rapporte à des intégrations sur des sous-parties différentes, dans lesquelles il est associé respectivement, à une valeur initiale et à une valeur finale du paramètre d'affichage, une opacité de longueur d'étalonnage prescrite à utiliser pour le calcul d'une contribution de l'intégrale de rendu de volume, et au moins un coefficient de couleur de longueur d'étalonnage prescrite,
- pour chaque contribution de l'intégrale de rendu de volume, détermination des opacités de longueur d'échantillonnage prescrite et des coefficients de couleur de longueur d'échantillonnage prescrite à partir des tables d'intégration à l'avance et calcul des troisièmes opacités recalculées sur les longueurs d'échantillonnage souhaitées à partir des opacités de longueur d'échantillonnage prescrite respectives, ainsi que du rapport de la longueur d'échantillonnage souhaitée et de la longueur d'échantillonnage prescrite et des troisièmes coefficients de couleur à partir des opacités de longueur d'échantillonnage prescrite, des coefficients de couleur de longueur d'échantillonnage prescrite, ainsi que du rapport de la longueur d'échantillonnage souhaitée et de la longueur d'échantillonnage prescrite et
- détermination de l'intégrale de rendu en volume à partir des contributions,

les troisièmes opacités étant calculées suivant la formule

$$1 - \alpha'(0,1) = (1 - \alpha(0,1))^{d'/d}$$

et les troisièmes coefficients de couleur suivant la formule

$$C'(0,1) = \sum_{i=0}^{n} C(\lambda_i, \lambda_{i+1}) \frac{1 - T(\lambda_1, \lambda_{i+1})^x}{1 - T(\lambda_1, \lambda_{i+1})} \prod_{j=0}^{i-1} T(\lambda_j, \lambda_{j+1})^x$$

dans lesquelles

$\alpha'(0,1)$ est la troisième opacité sur toute la longueur d'intégration de 0 à 1,

$\alpha(0,1)$ est l'opacité présente, le cas échéant, également comme opacité de longueur d'échantillonnage prescrite pour toute la longueur d'intégration de 0 à 1 pour la longueur d'échantillonnage prescrite,

$C'(0,1)$ est le troisième coefficient de couleur sur toute la longueur d'intégration de 0 à 1,

$\lambda_i$ sont les nombres associés aux paramètres de subdivision, qui satisfont $0 \leq \lambda_1 \leq \lambda_2 \leq ... \leq \lambda_n \leq 1$, avec la convention que $\lambda_0 = 0$ et $\lambda_{n+1} = 1$,

$C(\lambda_i, \lambda_{i+1})$ sont les coefficients de longueur d'échantillonnage prescrite pour la sous-partie entre $\lambda_i$ et $\lambda_{i+1}$,

$T(\lambda_i, \lambda_{i+1}) = 1 - \alpha(\lambda_i, \lambda_{i+1})$ est la transparence de la longueur d'échantillonnage prescrite pour la sous-partie entre $\lambda_1$ et $\lambda_{i+1}$, avec $\alpha(\lambda_i, \lambda_{i+1})$ étant les opacités de longueur d'échantillonnage prescrite correspondantes et

$x = \frac{d'}{d}$ est le rapport de la longueur $d'$ d'échantillonnage souhaitée à la longueur $d$ d'échantillonnage prescrite,

dans lequel les coefficients $C(\lambda_i, \lambda_{i+1})$ de couleur de longueur d'échantillonnage prescrite et les opacités $\alpha(\lambda_i, \lambda_{i+1})$ de longueur d'échantillonnage prescrite pour la sous-partie entre $\lambda_1$ et $\lambda_{i+1}$ peuvent être décrits par

$$C(\lambda_1, \lambda_2) = \int_{\lambda_1}^{\lambda_2} \tau\left((1-\omega)s_f + \omega s_b\right) c\left((1-\omega)s_f\right.$$

$$\left. + \omega s_b\right) exp\left(-\int_{\lambda_1}^{\omega} \tau\left((1-t)s_f + t s_b\right) d\, dt\right) d\, d\omega$$

et

$$\alpha(\lambda_1, \lambda_2) = 1 - \exp\left(-\int_{\lambda_1}^{\lambda_2} \tau\left((1-\omega)s_f + \omega s_b\right) d\, d\omega\right)$$

dans lesquelles $s_f$ et $s_b$ sont des valeurs aux limites du paramètre $s$ d'affichage supposé linéaire pour le domaine d'intégration et $\tau$ est la densité d'extinction, ainsi que $c$ la fonction de couleur dans l'intégrale de rendu de volume.

2. Procédé suivant la revendication 1, **caractérisé en ce que** l'on détermine, comme table d'intégration à l'avance, une première table d'intégration à l'avance ayant de premières opacités et de premiers coefficients de couleur, dont les intégrales ont été exploitées sur toute la longueur d'intégration, et on détermine le nombre moins un de deuxièmes tables d'intégration à l'avance ayant des deuxièmes opacités et des deuxièmes coefficients de couleur, dont les intégrales ont été exploitées chacune pour l'un des nombres moins un de sous-parties, les troisièmes opacités provenant des premières opacités, ainsi que du rapport de la longueur d'échantillonnage souhaitée et de la longueur d'échantillonnage prescrite et les troisièmes coefficients de couleur des premières et deuxièmes opacités, des premiers et deuxièmes coefficients de couleur, ainsi que du rapport de la longueur d'échantillonnage souhaitée et de la longueur d'échantillonnage prescrite.

3. Procédé suivant la revendication 2, **caractérisé en ce que** l'on décompose la longueur d'intégration en exactement deux sous-parties, dans lequel la exactement une seconde table d'intégration à l'avance se rapporte à la première sous-partie et les troisièmes coefficients de couleur se calculent suivant la formule

$$C'(0,1) \approx C(0,\lambda_1) \frac{1 - T(0,\lambda_1)^x}{1 - T(0,\lambda_1)} + \left( C(0,1) - C(0,\lambda_1) \right) \frac{T(0,\lambda_1)^x - T(0,1)^x}{T(0,\lambda_1) - T(0,1)}$$

4. Procédé suivant l'une des revendications précédentes, **caractérisé en ce que** l'on détermine le au moins un paramètre de subdivision dans un procédé d'optimisation visant la minimisation de la distance entre des troisièmes coefficients de couleur déterminés par intégration et des troisièmes coefficients de couleur déterminés à partir d'opacités de longueur d'échantillonnage prescrite et de coefficients de couleur de longueur d'échantillonnage prescrite.

5. Procédé suivant la revendication 4, **caractérisé en ce que** l'on prescrit, de manière fixe, notamment à 0,5, le rapport entre la longueur d'échantillonnage souhaitée et la longueur d'échantillonnage prescrite pour le procédé d'optimisation.

6. Procédé suivant la revendication 4 ou 5, **caractérisé en ce que**, dans le cadre du procédé d'optimisation, on maximise une fonction cible positive par décalage et définie en omettant les troisièmes coefficients de couleur déterminés par intégration et indépendants du paramètre de subdivision.

7. Procédé suivant l'une des revendications 4 à 6 en se référant à la revendication 3, **caractérisé en ce que**, avant d'effectuer le procédé d'optimisation, on détermine la première table d'intégration à l'avance, dans lequel, en utilisant des intégrales de la première table d'intégration à l'avance, on effectue le procédé d'optimisation pendant l'intégration numérique pour déterminer la au moins une deuxième table d'intégration à l'avance, dans lequel, après chaque stade partiel de l'intégration numérique, on contrôle si, pour les intégrales formées jusqu'ici, il a été trouvé un extremum nouveau de la fonction cible et, en présence d'un extremum nouveau, on met cette intégrale en mémoire.

8. Procédé suivant l'une des revendications 4 à 7, **caractérisé en ce que**, si l'on utilise plusieurs couleurs à fonctions de couleur associées, on effectue le procédé d'optimisation pour toutes les couleurs en même temps, en utilisant une fonction cible, qui provient de la somme des fonctions cibles des diverses couleurs.

9. Procédé suivant l'une des revendications précédentes, **caractérisé en ce que** l'on utilise, pour l'intégrale du rendu de volume, une fonction d'extinction modulée en fonction de la valeur absolue du gradient tridimensionnel du paramètre d'affichage, dans lequel, lors de son exploitation, on l'applique pour tenir compte de la modulation du facteur de modulation au rapport de la longueur d'échantillonnage souhaitée à la longueur d'échantillonnage prescrite.

10. Procédé suivant la revendication 9, **caractérisé en ce que**, pour une valeur, venant en dessous d'une valeur de seuil, du rapport, multiplié par le facteur de modulation, de la longueur d'échantillonnage souhaitée à la longueur d'échantillonnage prescrite, on utilise, pendant la détermination d'un troisième coefficient de couleur, une formule approchée, moins fastidieuse à calculer.

11. Procédé suivant la revendication 10, **caractérisé en ce que** l'on développe, jusqu'au deuxième terme, une fonction de puissance ayant le rapport, multiplié par le facteur de modulation, de la longueur d'échantillonnage souhaitée à la longueur d'échantillonnage prescrite comme exposant et/ou on utilise, pour le troisième coefficient de couleur, une formule provenant d'une autre mise en équation très simplifiée.

12. Procédé suivant l'une des revendications précédentes, **caractérisé en ce que**, pour déterminer les intégrales des tables d'intégration à l'avance, on prend le paramètre d'affichage comme fonction linéaire du lieu sur la longueur d'échantillonnage prescrite.

13. Dispositif (1) de calcul constitué pour effectuer un procédé suivant l'une des revendications précédentes.

14. Programme informatique qui effectue les stades d'un procédé suivant l'une des revendications 11 à 12, lorsqu'il est exécuté sur un dispositif (1) de calcul.

## FIG 1

## FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Area and volume coherence for efficient visualization of 3d scalar functions. **N. MAX et al.** Proceedings San Diego Workshop on Volume Visualization 1990. ACM Computer Graphics, 1990, vol. 24, 27-33
- **S. RÖTTGER et al.** Hardware-accelerated volume and isosurface rendering based on cell-projection. *Proceedings IEEE Visualization 2000,* 2000, 109-116
- High quality pre-integrated volume rendering using hardware accelerated pixel shading. **K. ENGEL et al.** Proceedings Graphics Hardware 2001. ACM Press, 2001, 9-16
- Pre-integrated volume rendering. **M. KRAUS ; T. ERTL.** The Visualization Handbook. Academic Press, 2004, 211-228
- **KNISS et al.** Gaussian transfer functions for multi-field volume visualizations. *Proceedings Visualization 2003,* 2003, 497-504
- Pre-integrated volume rendering for Multi-Dimensional Transfer Functions. **M. KRAUS.** IEEE/EG Symposium on Volume and Point-Based Graphics. 2008, 1-8
- **S. RÖTTGER et al.** Smart Hardware-Accelerated Volume Rendering. *Proceedings of EG/IEEE TCVG Symposium on Visualization VisSym '03,* 2003, 231-238
- **J. P. SCHULZE et al.** Integrating pre-integration into the shear-warp algorithm. *Proceedings Volume Graphics 2003,* 2003, 109-118
- **GUTHE et al.** High-quality unstructured volume rendering on the PC platform. *Proceedings Graphics Hardware 2002,* 2002, 119-125
- **VON S. RÖTTGER et al.** Spatialized Transfer Funktions. *EuroVis,* 2005, 271-278
- **J.-F. L. HAJJAR et al.** Second Order Pre-Integrated Volume Rendering. *Proc. IEEE Pacific Visualization Symp.,* 2008, 9-16